# EUROPÄISCHE PATENTSCHRIFT

(11) **EP 2 661 344 B1**
(45) Veröffentlichungstag und Bekanntmachung des Hinweises auf die Patenterteilung: **04.10.2017**
(21) Anmeldenummer: 11810826.5
(22) Anmeldetag: 20.12.2011
(51) Int. Cl.: B29B 15/12, B29C 70/00, C04B 35/18, C04B 35/185, C04B 35/80

(54) **VERFAHREN ZUR HERSTELLUNG EINES BAUTEILS AUS FASERVERSTÄRKTEM VERBUNDWERKSTOFF**
PROCESS FOR THE PRODUCTION OF A STRUCTURAL COMPONENT MADE OF A FIBER-REINFORCED COMPOSITE
PROCEDE DE PRODUCTION D' UN ÉLÉMENT DE CONSTRUCTION EN & xA;MATÉRIAU COMPOSITE RENFORCÉ PAR DES FIBRES

(30) Priorität: 20.12.2010 DE 102010055221
(43) Veröffentlichungstag der Anmeldung: 13.11.2013
(73) Patentinhaber: Airbus Defence and Space GmbH, 85521 Ottobrunn (DE)
(72) Erfinder: WILHELMI, Christian, 85635 Höhenkirchen-Siegertsbrunn (DE); MACHRY, Thays, 80469 München (DE); KOCH, Dietmar, 28359 Bremen (DE)
(74) Vertreter: Isarpatent
(86) Internationale Anmeldenummer: PCT/EP2011/073361
(87) Internationale Veröffentlichungsnummer: WO 2012/084917

(56) Entgegenhaltungen:
- EP-A1- 1 364 929
- EP-A1- 1 798 428
- EP-A2- 2 213 839
- WO-A1-99/52838
- WO-A1-2008/014858
- JP-A- 2006 077 343
- US-A- 5 468 358
- C. GEORGI, U. SCHINDLER, H.-G. KRUEGER, H. KERN: "Nanokomposite für die Herstellung oxidischer Matrices keramischer Faserverbundwerkstoffe", MATERIALWISSENSCHAFT UND WERKSTOFFTECHNIK, Nr. 34, 10. Januar 2003 (2003-01-10), Seiten 623-626, XP002674619, DOI: http://onlinelibrary.wiley.com/doi/10.1002 /mawe.200390125/pdf Gefunden im Internet: URL:http://onlinelibrary.wiley.com/doi/10. 1002/mawe.200390125/pdf>
- Rahm, Jens: "WERKSTOFFE UND WERKSTOFFTECHNISCHEANWENDUNGEN", Werkstoffe und Werkstofftechnische Anwendungen, Band 28, Bd. 28 11. Februar 2008 (2008-02-11), Seiten 1-197, XP002674620, TU Chemnitz ISSN: 1439-1597 Gefunden im Internet: URL:http://www.qucosa.de/fileadmin/data/qu cosa/documents/5591/data/Rahm_Diss.pdf

## Beschreibung

### Technisches Gebiet der Erfindung

Die vorliegende Erfindung betrifft ein Verfahren zur Herstellung von Bauteilen aus faserverstärktem Verbundwerkstoff.

### Hintergrund der Erfindung

JP 2006 077343 A beschreibt ein Herstellungsverfahren für eine Karbonfasermatte gerichtet, die durch Nassvermahlen zerkleinerter Carbonfaserstränge erhalten wird. EP 1 364 929 A1 bezieht sich auf ein Verfahren zur Herstellung von SiC-Faserverstärktem SiC-Kompositmaterial mit hoher Bruchzähigkeit. EP 2 213 839 A2 ist auf ein segmentiertes Keramikbauteil für ein Gasturbinentriebwerk gerichtet. EP 1 798 428 A1 bezieht sich auf ein flechttechnisch hergestelltes Faserverbundbauteil. US 5 468 358 A bezieht sich auf Verfahren zur Herstellung von faserverstärktem Kohlenstoff, Keramik oder Metallmatrix-Verbundwerkstoffen unter Verwendung der elektrophoretischen Infiltration eines Arrays oder einer Vorform aus elektrisch isolierenden Fasern, die in der Nähe einer Target-Elektrode in einer geeigneten flüssigen Aufschlämmung angeordnet sind. WO 99/52838 A1 ist auf einen zähen keramischen Verbundwerkstoff mit niedriger Luftdurchlässigkeit gerichtet. WO 2008/014858 A1 betrifft ein Verfahren zur Herstellung von Faserverbundbauteilen. C. Georgi et al., "Nanokomposite für die Herstellung oxidischer Matrices keramischer Faserverbundwerkstoffe", Materialwissenschaft und Werkstofftechnik, Nr. 34, 10. Januar 2003, Seiten 623-626 beschreibt die Herstellung keramischer Faserverbundwerkstoffe auf der Basis von Nextel™-Geweben durch elektrophoretische Infiltration. J. Rahm, "Beitrag zur Herstellung langfaserverstärkter Aluminium-Matrix-Verbundwerkstoffe durch Anwendung der Prepregtechnik" , Werkstoffe und Werkstofftechnische Anwendungen, Band 28, 11. Februar 2008, Seiten 1-197.

Die Verwendung des Fadenwickelverfahrens zur Herstellung von Bauteilen aus faserverstärkten Werkstoffen ist bekannt. Beim genannten Fadenwickelverfahren werden kontinuierliche Verstärkungsfasern auf einem rotierenden Stützkörper, den sogenanntem Dorn, abgelegt. Nach Beendigung des Wickelverfahrens wird der Dorn wieder entfernt.

Faserverstärkte Verbundkeramik umfasst Langfasern, die in einer Keramik-Matrix eingebettet sind. Bei oxidischer Verbundkeramik wird das Matrixmaterial durch Hochtemperaturbehandlung, d.h. durch Sintern, aus Vormaterialien erzeugt. Bei Temperaturen von typischerweise mehr als 1000°C entsteht dabei eine oxidkeramische, poröse Matrix.

Um die gewünschten Materialeigenschaften zu erhalten darf die Porosität der Matrix weder zu groß noch zu klein sein. Im Stand der Technik wird gelehrt, dass bei zu großer Porosität eine Nachbehandlung notwendig sein kann, um die vorhandenen Poren zumindest zum Teil mit zusätzlichem Matrixmaterial aufzufüllen. Diese Nachbehandlung wird auch als "Infiltration" bezeichnet.

Die Porosität der Matrix hängt unter anderem von der Herstellungsart des zu sinternden Vormaterials ab.

Die der vorliegenden Erfindung zugrundeliegende Aufgabe besteht darin, ein effizientes, schnelles und/oder kostengünstiges Verfahren zur Herstellung qualitativ hochwertiger Bauteile aus faserverstärktem Verbundwerkstoff bereitzustellen.

Das der Erfindung zugrundeliegende Problem wird durch das in den Patentansprüchen und in den bevorzugten Ausführungsformen beschriebene Verfahren gelöst. Die Lösung besteht unter anderem darin, die Bauteile derart herzustellen, dass eine Nachbehandlung ("Infiltration") zur Verminderung der Porosität der Matrix nicht notwendig ist. Die Auslassung dieses Nachbehandlungsschrittes hat u.a. den Effekt, dass bei gleichbleibenden oder vorzugswiese verbesserten Materialeigenschaften ein schnelleres und/oder kostengünstigeres Verfahren bereitgestellt wird.

### Zusammenfassung der Erfindung

Die vorliegende Erfindung betrifft ein Verfahren zur Herstellung eines Bauteils aus faserverstärktem Verbundwerkstoff.

In einer Ausführungsform betrifft die vorliegende Erfindung ein Verfahren, welches folgende Schritte umfasst oder aus folgenden Schritten besteht:
a) Imprägnieren mindestens einer vorzugsweise keramischen Faser;
b) Aufbringen der in Schritt a) erhaltenen Faser auf einen Träger;
c) Gefrieren des in Schritt b) erhaltenen Produkts;
d) Erwärmen des in Schritt c) erhaltenen Produkts zur Erzeugung eines Grünkörpers;
e) Sintern des in Schritt d) erhaltenen Produkts, vorzugsweise nach Entfernen des Trägers.

In einer bevorzugten Ausführungsform betrifft die vorliegende Erfindung ein Verfahren, welches folgende Schritte umfasst oder aus folgenden Schritten besteht:
a) Imprägnieren mindestens einer kontinuierlichen keramischen Faser;
b) Aufwickeln der in Schritt a) erhaltenen Faser auf einen Träger;
c) Gefrieren des in Schritt b) erhaltenen Produkts;
d) Erwärmen des in Schritt c) erhaltenen Produkts zur Erzeugung eines Grünkörpers;
e) Sintern des in Schritt d) erhaltenen Produkts, vorzugsweise nach Entfernen des Trägers.

In einer bevorzugten Ausführungsform betrifft die vorliegende Erfindung ein Verfahren zur Herstellung eines Bauteils aus oxidischer Faserverbundkeramik, welches folgende Schritte umfasst oder aus folgenden Schritten besteht:
a) Imprägnieren mindestens einer kontinuierlichen, oxidkeramischen Faser;
b) Aufwickeln der in Schritt a) erhaltenen Faser auf einen Träger;
c) Gefrieren des in Schritt b) erhaltenen Produkts;
d) Erwärmen des in Schritt c) erhaltenen Produkts zur Erzeugung eines Grünkörpers;
e) Sintern des in Schritt d) erhaltenen Produkts, vorzugsweise nach Entfernen des Trägers.

Das erfindungsgemäße Verfahren ist dadurch charakterisiert, dass die nach Schritt d) und/oder e) im jeweiligen Produkt vorhandenen Hohlräume nicht mit einem anorganischen Feststoff, insbesondere nicht mit einem Metalloxid aufgefüllt werden müssen, wobei zum Imprägnieren der Faser eine wässrige Suspension verwendet wird, wobei die genannte Suspension Nanopartikel, mindestens einen Füllstoff mit einer Partikelgröße von mindestens 1 µm und optional ein Dispergiermittel umfasst. Das erfindungsgemäße Verfahren erlaubt es also, die Porosität des in Schritt e) erhaltenen Produkts so einzustellen, dass ein Nachbehandlungsschritt zur Reduzierung der Porosität (Infiltration) nicht notwendig ist.

Zum Imprägnieren der Faser wird in Schritt a) eine wässrige Suspension verwendet, die beim Gefrieren ein Gel bildet, welches nach Entfernen des Wassers zum Sintern geeignet ist (ein sogenannter Sol-Gel-Schlicker). Vorzugsweise wird zum Imprägnieren der Faser ein wässriger, keramischer Sol-Gel-Schlicker verwendet. Vorzugsweise ist der zum Imprägnieren der Faser verwendete Sol-Gel-Schlicker trotz eines relativ hohen Feststoffgehalts eher dünnflüssig. Vorzugsweise handelt es sich beim Sol-Gel-Schlicker um eine wässrige Suspension mit einer Viskosität von 150-250 cP und einem Feststoffgehalt von mindestens 65 Gew.-%.

Vorzugsweise erfolgt das Imprägnieren der Faser in mindestens zwei Schritten. Dabei wird die Faser bei jedem der Schritte vorzugsweise über eine Imprägnierrolle geführt, ohne die Faser unterzutauchen. Somit wird in jedem der Schritte jeweils nur eine Hälfte der Faser (d.h. jeweils nur eine Längsseite der Faser) imprägniert. Um die gesamte Faser zu imprägnieren sind also mindestens zwei Schritte notwendig. Durch dieses Verfahren wird die Faser überall bzw. beidseitig und homogen mit dem Sol-Gel Schlicker imprägniert respektive infiltriert, so dass auch innerhalb der Faser keine heterogen infiltrierte oder nicht infiltrierte Bereiche vorliegen Vorzugsweise wird die Menge und Art des Sol-Gel-Schlickers so eingestellt, dass der Faservolumenanteil des in Schritt e) erzeugten Produkts mindestens 20% beträgt.

Vorzugsweise erfolgt das Gefrieren in Schritt c) langsam, d.h. es wird auf ein aufwändiges, kostenintensives Schockgefrieren verzichtet. Dies hat den Effekt, dass beim Gelgefrieren relative große, typischerweise längliche Eiskristalle gebildet werden. Es hat sich überraschenderweise gezeigt, dass solche Eiskristalle die Materialeigenschaften des Bauteils nicht verschlechtern oder allenfalls sogar verbessern.

Einige der zurzeit erhältlichen oxidfaserverstärkter Oxidkeramik haben in der Matrix Rest-Kohlenstoff aus der Si-O-C-Phase. Dieser Rest-Kohlenstoff stellt insbesondere für Langzeitanwendungen ein thermo-mechanisches Problem dar. Weitere technische Probleme sind bekannt. Zurzeit gibt es auf dem Markt keine Materialien und insbesondere keine Komponenten für Gasturbinen, welche ausreichend thermostabil, oxidations- und langzeitbeständig sind und dadurch eine sehr hohe Lebensdauer haben.

Die erfindungsgemäß hergestellten Bauteile sind thermisch stabil, oxidationsbeständigen und langzeitbeständig. Sie können insbesondere in der Industrie, in der Raumfahrt und/oder in der Luftfahrt verwendet werden.

### Beschreibung der Abbildungen

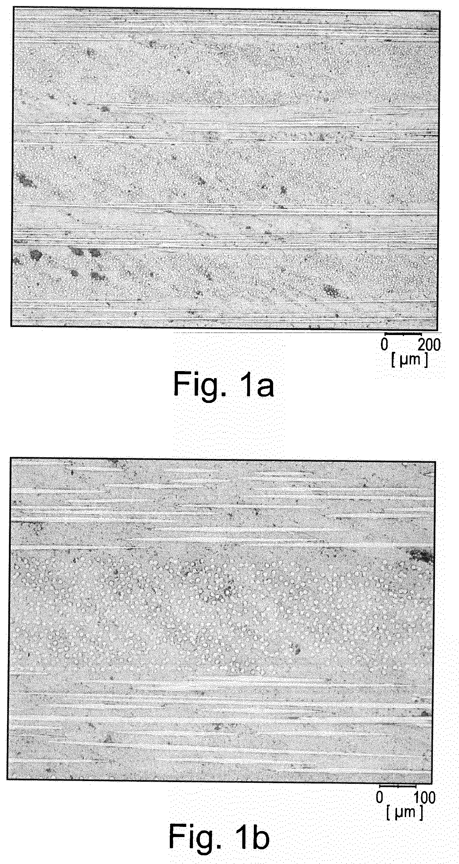

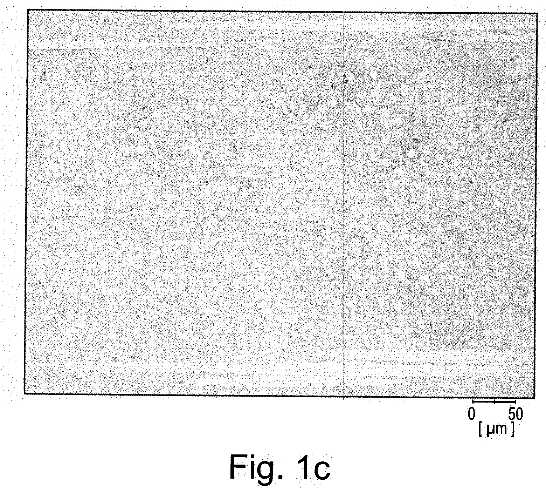

**Abbildungen 1a, 1b und 1c** zeigen Querschnitte ("Schliffbilder") des in Ausführungsbeispiel 1 hergestellten Bauteils in unterschiedlichen Vergrößerungen. Die Proben wurden mit Silica Sol und Nextel™ 610 Fasern der Firma 3M hergestellt, und zwar über eine Kombination von Wickel-Verfahren und Gefriergelierung. Das Material hat 8 Einzellagen und eine 0°/90° Faserarchitektur. Die Schiffbilder wurden mittels optischer Mikroskopie (Metallographie) aufgenommen. In Abb. 1a ist die Verbindung zwischen den Einzellagen zu sehen; eine Delamination ist nicht zu erkennen.
In Abb. 1b sind drei Einzellagen zu sehen; deutlich ist die gute Imprägnierung der Fasern und die Keramik-Matrix zwischen den Fasern zu erkennen. Auch in Abb. 1c ist die Faser-Imprägnierung zu erkennen.

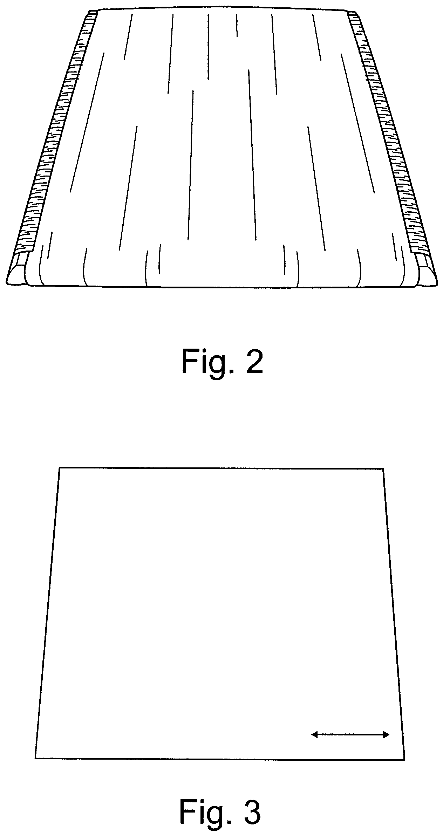

**Abbildung 2** zeigt einen quadratischen Träger, der mit einer imprägnierten keramischen Faser umwickelt ist. Beim Träger handelt es sich um ein quadratisches Voll-Werkzeug aus Aluminium. Das bei der Umwicklung entstandene, auf Abbildung 2 zu sehende Gelege weist 8 Schichten auf, wobei übereinanderliegende Faserabschnitte im Winkel von 90° zueinander angeordnet sind, d.h. es wurde ein Lagenaufbau mit einer 0°/90° Faserarchitektur ausgebildet. Auf dem Bild ist der im Ausführungsbeispiel 1 erhaltene Grünkörper (d.h. nach Trocknung) zu sehen.

**Abbildung 3** zeigt das in Ausführungsbeispiel erhaltene Produkt nach Sintern des Grünkörpers bei ca. 1200°C. Zur Entfernung des in Abbildung 2 zu sehenden quadratischen Trägers wurde der Grünkörper vor dem Sintern zerschnitten, respektive zugeschnitten, d.h. das Sintern wurde ohne Träger durchgeführt. Der Grünkörper hat die Dimensionen von ca. 230x230 mm bei einer Dicke von 2,45 mm.

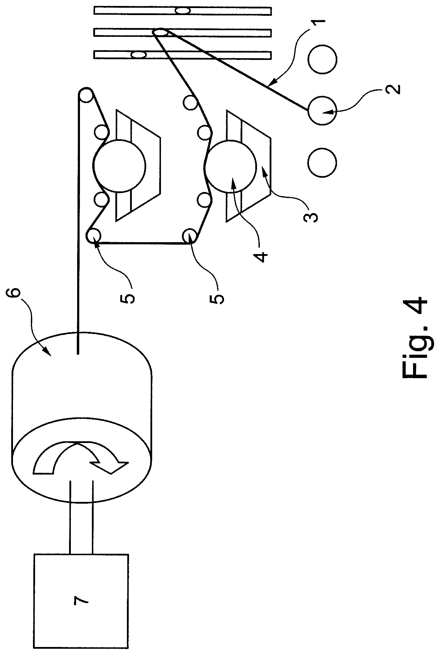

**Abbildung 4** zeigt schematisch die Imprägnierung einer Faser mit dem wässrigen Sol-Gel-Schlicker, wobei die Imprägnierung in zwei Schritten unter Verwendung von zwei Imprägnationsrollen (d.h. ohne Untertauchen der Fasern) und mehreren Umlenkrollen vorgenommen wird. In der gezeigten Ausführungsform wird mit nur einer Faser (1) gewickelt. Möglich wären maximal 3 Fasern. Von den insgesamt 3 Spulen wird deshalb nur die mittlere Spule (2) verwendet. Der Faden wird in einem ersten Schritte über die erste Imprägnierrolle (4) von insgesamt zwei Imprägnierrollen geführt. Die Imprägnierrolle (4) ist in Kontakt mit dem ersten Imprägnierbad (3) von insgesamt zwei Imprägnierbädern. Der Faden (1) wird anschließend via Umlenkrollen (5) zur zweiten Imprägnierrolle geführt. Der imprägnierte Faden wird schließlich auf den Träger (6) aufgewickelt. Der Träger (6) wird durch den Antrieb (7) rotiert.

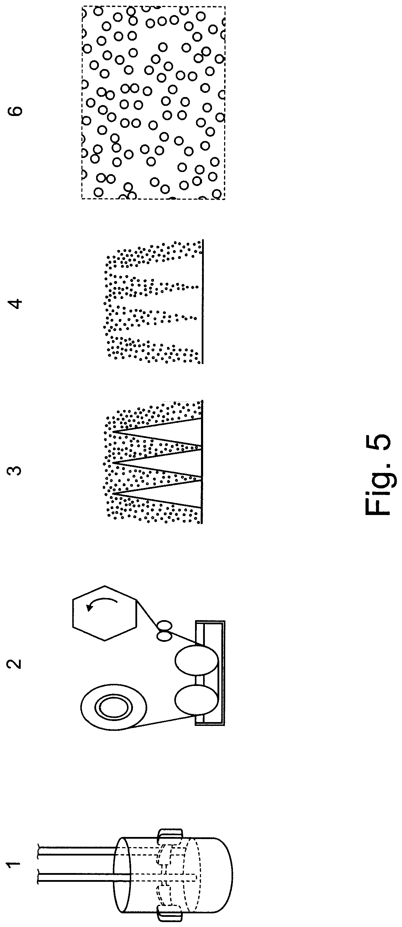

**Abbildung 5** zeigt schematisch eine Ausführungsform des erfindungsgemäßen Verfahrens. Im Teil (1) wird die Suspension zum Imprägnieren der Faser bereitgestellt. In Teil (2) wird das Imprägnieren (hier mit Untertauchen der Faser) und das Aufwickeln der Faser gezeigt. In Teil (3) sind die im gefrorenen Material eingelagerten, säulenartigen Eiskristalle zu sehen. Nach dem Aufschmelzen der Eiskristalle und dem Entfernen des entstandenen Wassers verbleiben die in Teil (4) zu sehenden Hohlräume. Nach dem anschließenden Sintern entsteht der in Teil (5) als Schliffbild zu sehende faserverstärkte Verbundwerkstoff.

### Detaillierte Beschreibung der Erfindung

Konventionelle, nicht faserverstärkte technische Keramiken brechen unter mechanischen oder thermomechanischen Belastungen leicht, weil selbst kleine Fertigungsfehler oder Kratzer auf der Oberfläche zum Startpunkt eines Risses werden können. Der Ausbreitung von Rissen wird bei nicht faserverstärkten technischen Keramiken ein nur sehr geringer Widerstand entgegengesetzt. Das daraus resultierende spröde Bruchverhalten erschwert oder verunmöglicht viele Anwendungen.

Das spröde Bruchverhalten (d.h. die ungenügende Duktilität) kann durch Einbettung von Fasern in eine Matrix vermindert werden. Die eingebetteten Fasern bilden beim Auftreten von Rissen im Matrixmaterial eine Brücke über den Riss, was nebst einer Verbesserung der Duktilität zu einem hohen Risswiderstand führt.

Die beschriebene Brückenbildung setzt voraus, dass die Matrix längs der Faser gleiten kann, d.h. nur relativ schwach mit den Fasern verbunden ist. Beim erfindungsgemäß hergestellten faserverstärkten Verbundwerkstoff wird diese relativ schwache Anbindung durch die Porosität der Matrix und/oder sonst wie erzeugte Lücken oder dünne Schichten zwischen Faser und Matrix hergestellt.

Das erfindungsgemäße Verfahren erlaubt es, die Porosität so zu steuern, dass weder der Grünkörper noch das gesinterte Produkt nachbehandelt werden müssen, d.h. die durch das Gefriergelieren und/oder Sintern entstandenen Poren, respektive Hohlräumen, müssen nicht zwingend ausgefüllt werden.

Nachfolgend wird das erfindungsgemäße Verfahren, die dabei verwendeten Materialien sowie das erfindungsgemäß hergestellte Bauteil detailliert beschrieben.

### 1. Zu verwendende Faser

Im Kontext der vorliegenden Erfindung sind mit "Fasern" diejenigen Fasern gemeint, die beim erfindungsgemäßen Sintern nicht oder zumindest nicht vollständig zerstört (z.B. verbrannt) werden. Ausgeschlossen sind somit Fasern, die ausschließlich oder mehrheitlich aus kohlenstoffhaltigem Material bestehen. Typischerweise handelt es sich bei den erfindungsgemäßen Fasern um keramische Fasern. Vorzugsweise handelt es sich bei den erfindungsgemäßen Fasern um oxidkeramische Fasern.

Die Länge der zu verwendenden Faser hängt insbesondere von der Durchführungsart des Schrittes b) des erfindungsgemäßen Verfahrens ab.

Vorzugsweise wird die Faser in Schritt b) auf einen Träger aufgewickelt. Bei Verwendung des bevorzugten Wicklungsverfahrens dürfte es in den meisten Fällen notwendig sein, dass die Faser eine Länge von mindestens 2 m aufweist. Typischerweise hat die zum Wickeln verwendete Faser eine Länge von mindestens 5 m oder von mindestens 10 m. Im Kontext der vorliegenden Erfindung ist unter "Faser" deshalb vorzugsweise eine kontinuierliche Faser zu verstehen, d.h. ein Gebilde, das in seiner Form einem Faden und/oder einem Draht ähnlich ist.

Denkbar -wenn auch wenig bevorzugt- ist es, die Faser in Schritt b) ohne Wickelverfahren auf den Träger aufzubringen, z.B. in Form eines Faserbreis. In diesen Fällen können die Fasern allenfalls deutlich kürzer sein. Denkbar sind etwa Fasern mit einer Mindestlänge von 0,1 mm, 1 mm, 2 mm, 1 cm, 2 cm, 5 cm, 10 cm, 20 cm, 50 cm oder 80 cm.

Vorzugsweise werden kommerziell erhältliche oxidkeramische Fasern verwendet. Zur Herstellung solcher Fasern wird typischerweise eine Masse zu einer Faser versponnen, die nach dem Trocknen als Grünfaser bezeichnet wird. Diese Grünfasern werden durch den erfindungsgemäßen Sinterprozess zur fertigen oxidkeramische Fasern umgewandelt.

Im erfindungsgemäßen Verfahren wird vorzugsweise eine keramische Faser verwendet, die mindestens ein Metalloxid, und/oder Halbmetalloxid umfasst. Vorzugsweise besteht die Faser mindestens zu 90 Gew.-%, noch bevorzugter mindestens zu 95 Gew.-% und am bevorzugtesten mindestens zu 98 Gew.-% aus Metalloxiden und/oder Halbmetalloxiden.

Im erfindungsgemäßen Verfahren wird vorzugsweise eine keramische Faser verwendet, die mindestens eine Verbindung enthält, ausgewählt aus der Gruppe bestehend aus Aluminiumoxid, Siliziumoxid, Aluminosilikat, Aluminoborsilikat und Boroxid. In einer Ausführungsform besteht die Faser mindestens zu 90 Gew.-%, noch bevorzugter mindestens zu 95 Gew.-% und am bevorzugtesten mindestens zu 98 Gew.-% aus Aluminiumoxid, Siliziumoxid, Aluminosilikat, Aluminoborsilikat und/oder Boroxid wie z.B. Al₂O₃, SiO₂, 2Al₂O₃·1SiO₂ und 3Al₂O₃·2SiO₂.

In einer bevorzugten Ausführungsform wird eine Aluminiumoxid-Faser verwendet, die mindestens zu 95 Gew.-%, noch bevorzugter mindestens zu 98 Gew.-% und am bevorzugtesten mindestens zu 99 Gew.-% aus Al₂O₃ besteht.

In einer anderen bevorzugten Ausführungsform wird eine keramische Faser verwendet, die zwischen 60 und 90 Gew.-% Al₂O₃ und zwischen 10 und 40 Gew.-% SiO₂ umfasst. In einer weiteren bevorzugten Ausführungsform wird eine keramische Faser verwendet, die zwischen 70 und 90 Gew.-% Al₂O₃ und zwischen 10 und 30 Gew.-% SiO₂ umfasst. In einer besonders bevorzugten Ausführungsform wird eine keramische Faser verwendet, die zwischen 80 und 90 Gew.-% Al₂O₃ und entsprechend zwischen 10 und 20 Gew.-% SiO₂ umfasst.

In Frage kommen z.B. die auf dem Markt erhältlichen Fasern auf der Basis von Aluminiumoxid und Siliziumoxid, die zum Teil noch zusätzlich Boroxid oder Zirkonoxid enthalten.

In einer bevorzugten Ausführungsform werden Aluminiumoxid-Fasern oder Mullit-Fasern verwendet. Kommerziell erhältliche Aluminiumoxid-Fasern bestehen typischerweise zu mindestens ca. 99 Gew.-% aus Al₂O₃. Kommerziell erhältliche Mullit-Fasern sind Mischoxid-Fasern, die typischerweise ca. 71,8 Gew.-% Al₂O₃ und ca. 28,2 Gew.-% SiO₂ oder ca. 77,2 Gew.-% Al₂O₃ und ca. 22,8 Gew.-% SiO₂ enthalten.

In einer bevorzugten Ausführungsform der vorliegenden Erfindung werden die unter dem Handelsnamen Nextel™ von der Firma 3M™ erhältlichen Fasern verwendet. Dabei handelt es sich um kontinuierliche, polykristalline Metalloxidfasern, die mittels Sol-Gel-Technologie hergestellt werden.

Im Rahmen der vorliegenden Erfindung können alle unter dem Handelsnamen Nextel™ erhältlichen Fasern verwendet werden. Dazu gehören insbesondere Nextel™ 312, Nextel™ 440, Nextel™ 550, Nextel™ 610 und Nextel™ 720. Vorzugsweise wird Nextel™ 610 und/oder Nextel™ 720 verwendet.

Nextel™ 610 ist eine kontinuierliche polykristalline Metalloxidfaser mit einem Filamentdurchmesser von 10 bis 12 µm und einer Kristallgröße von weniger als 500 nm, die zu mehr als 99 Gew.-% aus Al₂O₃ besteht.

Die kommerziell erhältliche Faser Nextel™ 720 ist eine kontinuierliche polykristalline Metalloxidfaser mit einem Filamentdurchmesser von 10 bis 12 µm und einer Kristallgröße von weniger als 500 nm, die zu 85 Gew.-% aus Al₂O₃ und 15 Gew.-% SiO₂ besteht. Nextel 720 umfasst als Kristalltyp nebst alpha Al₂O₃ auch Mullit.

Nextel™ 550 ist eine Metalloxidfaser mit 73 Gew.-% Al₂O₃ und 27 Gew.-% SiO_{2.}

Nextel™ 440 ist eine Metalloxidfaser mit 70 Gew.-% Al₂O₃, 28 Gew.-% SiO₂ und 2 Gew.-% B₂O₃.

Nextel™ 312 ist eine Metalloxidfaser aus 62 Gew.-% Al₂O₃, 24 Gew.-% SiO₂ und 14 Gew.-% B₂O₃.

Vetrotex vertreibt eine Faser, die 60 Gew.-% SiO₂, 25 Gew.-% Al₂O₃, 9 Gew.-% CaO und 6 Gew.-% MgO umfasst.

### 2. Bereitstellung des Sol-Gel Schlickers

Das herzustellende Bauteil umfasst Fasern, die in eine poröse Matrix eingebettet sind.

Zur Bereitstellung der Matrix wird zwischen nebeneinanderliegenden und/oder aneinanderliegenden Faserabschnitten ein Sol-Gel Schlicker gebracht, der beim Gefrieren ein Gel bildet.

Erfindungsgemäß wird dies durch Imprägnieren der Faser mit einer geeigneten wässrigen Suspension erreicht. Das Imprägnieren der Faser erfolgt erfindungsgemäß vor dem Aufbringen der Faser auf den Träger.

Erfindungsgemäß wird zum Imprägnieren der Faser eine wässrige Suspension verwendet, die beim Gefrieren ein Gel bilden. Typischerweise handelt es sich dabei um eine kolloidale Suspension, insbesondere um einen Sol-Gel-Schlicker. Ausgeschlossen sind diejenigen Suspensionen, die beim Gefrieren kein Gel bilden.

Die zur Imprägnierung verwendete wässrige Suspension umfasst typischerweise mindestens eine Art Nanopartikel. Vorzugsweise umfassen die Nanopartikel mindestens ein Metalloxid und/oder Halbmetalloxid. Vorzugsweise bestehen die in der Suspension enthaltenen Nanopartikel mindestens zu 90 Gew.-%, noch bevorzugter mindestens zu 95 Gew.-% und am bevorzugtesten mindestens zu 98 Gew.-% aus Metalloxiden und/oder Halbmetalloxiden.

In einer bevorzugten Ausführungsform umfassen die Nanopartikel mindestens ein Element ausgewählt aus der Gruppe bestehend aus Aluminiumoxid, Siliziumoxid, Aluminosilikat, Aluminoborsilikat und Boroxid. Vorzugsweise bestehen die Nanopartikel mindestens zu 90 Gew.-%, noch bevorzugter mindestens zu 95 Gew.-% und am bevorzugtesten mindestens zu 98 Gew.-% aus Aluminiumoxid, Siliziumoxid, Aluminosilikat, Aluminoborsilikat und/oder Boroxid wie z.B. Al₂O₃, SiO₂ und 3Al₂O₃2SiO₂.

Besonders bevorzugt wird nanopartikuläres Aluminiumoxid, Siliziumoxid, Aluminosilikat, Aluminoborsilikat und/oder Boroxid verwendet.

Am bevorzugtesten wird zum Imprägnieren der Faser eine wässrige Suspension verwendet, die kolloidales Silica Sol umfasst. In einer Ausführungsform umfasst die zur Imprägnierung verwendete wässrige Suspension SiO₂-Partikel mit einem Durchmesser von weniger als 100 nm, vorzugsweise mit einem Durchmesser von weniger als 50 nm, noch bevorzugter mit einem Durchmesser von weniger als 30 nm und am bevorzugtesten mit einem Durchmesser von etwa 20 nm.

In einer Ausführungsform umfasst die zur Imprägnierung verwendete wässrige Suspension das von der Firma Nyacol erhältliche Silica Sol Nexsil 20. Das genannte Silica Sol umfasst ca. 40 Gew.-% SiO₂-Partikel mit einer Partikeldurchmesser von etwa 20 nm.

In einer Ausführungsform umfasst die zur Imprägnierung verwendete Suspension mehr als 5 Gew.-% Nanopartikel, vorzugsweise mehr als 10 Gew.-% Nanopartikel und am bevorzugtesten mehr als 15 Gew.-% Nanopartikel.

In einer anderen Ausführungsform umfasst die zur Imprägnierung verwendete Suspension zwischen 5 Gew.-% und 50 Gew.-% Nanopartikel, vorzugsweise zwischen 5 Gew.-% und 40 Gew.-% Nanopartikel, noch bevorzugter zwischen 5 Gew.-% und 30 Gew.-% Nanopartikel und am bevorzugtesten zwischen 10 Gew.-% und 30 Gew.-% Nanopartikel.

Zusätzlich zu den Nanopartikeln umfasst die zur Imprägnierung verwendete Suspension mindestens einen Füllstoff mit einer Partikelgröße von mindestens 1 µm, vorzugsweise mit einer Partikelgröße von mindestens 2 µm und am bevorzugtesten einen Füllstoff mit einer Partikelgröße zwischen 1 µm und 5 µm.

Vorzugsweise umfasst der Füllstoff mindestens ein Metalloxid und/oder Halbmetalloxid. Vorzugsweise besteht der Füllstoff mindestens zu 90 Gew.-%, noch bevorzugter mindestens zu 95 Gew.-% und am bevorzugtesten mindestens zu 98 Gew.-% aus Metalloxiden und/oder Halbmetalloxiden.

In einer bevorzugten Ausführungsform umfasst der Füllstoff mindestens ein Element ausgewählt aus der Gruppe bestehend aus Aluminiumoxid, Siliziumoxid, Aluminosilikat, Aluminoborsilikat und Boroxid. Vorzugsweise besteht der Füllstoff mindestens zu 90 Gew.-%, noch bevorzugter mindestens zu 95 Gew.-% und am bevorzugtesten mindestens zu 98 Gew.-% aus Aluminiumoxid, Siliziumoxid, Aluminosilikat, Aluminoborsilikat und/oder Boroxid wie z.B. Al₂O₃, SiO₂, 2Al₂O₃·1SiO₂ und 3Al₂O₃·2SiO₂.

In einer Ausführungsform wird ein Füllstoff verwendet, der mindestens zu 95 Gew.- %, noch bevorzugter mindestens zu 98 Gew.-% und am bevorzugtesten mindestens zu 99 Gew.-% aus Al₂O₃ besteht.

In einer bevorzugten Ausführungsform wird ein typischerweise rein anorganischer Füllstoff verwendet, der zwischen 60 und 90 Gew.-% Al₂O₃ und zwischen 10 und 40 Gew.-% SiO₂ umfasst. In einer weiteren bevorzugten Ausführungsform wird ein typischerweise rein anorganischer Füllstoff verwendet, der zwischen 70 und 90 Gew.-% Al₂O₃ und zwischen 10 und 30 Gew.-% SiO₂ umfasst. In einer besonders bevorzugten Ausführungsform wird ein typischerweise rein anorganischer Füllstoff verwendet, der zwischen 70 und 80 Gew.-% Al₂O₃ und entsprechend zwischen 20 und 30 Gew.-% SiO₂ umfasst.

Besonders bevorzugt wird ein Füllstoff verwendet, der ein Silikat umfasst, d.h. ein Silikat-Füllstoff. Besonders bevorzugt ist dabei ein Inselsilikat, insbesondere Mullit.

In einer bevorzugten Ausführungsform umfasst die zur Imprägnierung verwendete Suspension einen Silikat-Füllstoff, vorzugsweise das kommerziell erhältliche Produkt Mullite 21113 der Firma Reimbold & Strick. Das genannte Produkt umfasst 75,2 Gew.-% Al₂O₃ und 24,5 Gew.-% SiO₂ bei einer Partikelgröße von ungefähr 3 µm.

Vorzugsweise umfasst die wässrige Suspension mehr als 30 Gew.-% Füllstoff, bevorzugter mehr als 40 Gew.-% und am bevorzugtesten zwischen 50 und 80 Gew.-% Füllstoff.

Bei Herstellung der zur Imprägnierung verwendeten Suspension kann es angezeigt sein, den Füllstoff schrittweise unter Verwendung eines Mixers zuzugeben.

Erfindungsgemäß umfasst die zur Imprägnierung verwendete Suspension einen relativ hohen Feststoffgehalt. Um dennoch eine zur Imprägnierung verwendbare Suspension zu erhalten, wird der zur Imprägnierung verwendeten Suspension vorzugsweise zusätzlich ein Dispergiermittel beigegeben.

Das Dispergiermittel ist ein Verflüssigungsmittel, das die Herstellung von Schlicken mit hohen Feststoffgehalten ermöglicht. Die verflüssigende Wirkung des Dispergiermittels beruht typischerweise auf einer elektrochemischen Wechselwirkung zwischen den funktionellen Gruppen des Dispergiermittels und der Oberfläche der Feststoffpartikel. In einigen Fällen werden die Feststoffpartikel mit dem Dispergiermittel umhüllt, wodurch die Partikel abgeschirmt werden, was letztlich zu einer Viskositätsabnahme im Schlicker führt. In einigen Ausführungsformen umfasst das Dispergiermittel eine kohlenstoffhaltige Verbindung, wie zum Beispiel eine Carbonsäure, ein Polymer und/oder ein ionisches Polymer.

In einer bevorzugten Ausführungsform umfasst die zur Imprägnierung verwendete Suspension das Produkt Dolapix PC21 oder Dolapix CE64, beide erhältlich bei der Firma Zschimmer & Schwarz.

Vorzugsweise weist die zur Imprägnierung verwendete Suspension einen Feststoffgehalt von mindestens 65 Gew.-%, vorzugsweise von mindestens 70 Gew.-%, und am bevorzugtesten einen Feststoffgehalt im Bereich von 75 bis 85 Gew.-% auf.

Vorzugsweise ist die zur Imprägnierung verwendete Suspension trotz eines relativ hohen Feststoffgehalts eher dünnflüssig. Die erforderliche Zugabemenge des Dispergiermittels hängt deshalb u.a. vom Feststoffgehalt und der erwünschten Viskosität ab. Typischerweise umfasst die zur Imprägnierung verwendete Suspension zwischen 0,1 und 1,5 Gew.-%, vorzugsweise zwischen 0,5 und 1,0 Gew.-%. Dispergiermittel.

Typischerweise beträgt die Viskosität der zur Imprägnierung verwendeten Suspension von 50 bis 500 cP, vorzugsweise 100 bis 300 cP und am bevorzugtesten 150 bis 250 cP. Wenn nicht anders angegeben, beziehen sich alle Viskositätsangaben in der vorliegenden Patentanmeldung auf Angaben, die auf einem Brookfield Viskosimeter mit Spindelnummer 3, bei einer Geschwindigkeit von 10 rpm und bei einer Temperatur von 19°C ± 2°C gemessen wurden.

Nach Zugabe der Nanopartikel, des Füllstoffs und ggf. des Dispergiermittels kann es angezeigt sein, zusätzlich deionisiertes Wasser hinzuzugeben bis die gewünschte Viskosität erreicht wird.

### 3. Imprägnieren der Faser

Das Imprägnieren der Faser erfolgt bevorzugt in mindestens zwei Schritten. Hierbei wird die Faser nicht in die zur Imprägnierung verwendeten Suspension untergetaucht. Vielmehr hat es sich überraschenderweise als vorteilhaft herausgestellt, die Faser in einem ersten Schritt mittels einer Imprägnierrolle nur auf einer Hälfte, respektive Seite, zu imprägnieren. Dabei wird nur die untere Seite der Faser (in Längsrichtung), welche in Kontakt mit der Imprägnierrolle ist, imprägniert.

Zur anschließenden Imprägnierung der Oberseite der Faser kann die Faser mit einer oder mehreren Umlenkrolle umgedreht werden. In einem zweiten Schritt wird die andere Hälfte der Faser (d.h. die im ersten Schritt nicht imprägnierte Seite der Faser) in Kontakt mit einer Imprägnierrolle gebracht, um auch diese Hälfte zu imprägnieren. Dieses Verfahren ist schematisch in Abbildung 4 zu sehen. Dieses aufwendigere, zweistufige Verfahren hat gegenüber dem einstufigen Imprägnierverfahren mittels Untertauchen den Vorteil, dass die Faser homogen und vollständig imprägniert wird.

Obschon das zweistufige Imprägnierverfahren mittels Imprägnierrolle deutlich bevorzugt ist, kann der Imprägnierschritt in einer weniger bevorzugten Ausführungsform auch anders durchgeführt werden. Denkbar ist z.B. das Untertauchen der Faser, das einstufige Imprägnieren mittels mehrerer Imprägnierrollen ohne Untertauchen der Fasern, oder das Imprägnieren in drei oder mehr Schritten.

Zur Bestimmung der aufgetragenen Menge Imprägniermittel (Sol-Gel-Schlicker/Suspension) wird eine Faser mit einer bestimmten Länge vor und nach dem Imprägnierschritt gewogen. Typischerweise beträgt die durch den Imprägnierschritt verursachte Gewichtszunahme der Faser 1 bis 200%. Vorzugsweise beträgt die durch den Imprägnierschritt verursachte Gewichtszunahme der Faser 100 bis 180%, bevorzugter 120 bis 160% und am bevorzugtesten 130 bis 150%.

Einige der kommerziell erhältlichen Fasern sind mit einem kohlenstoffhaltigen Überzug versehen, welcher typischerweise ein kohlenstoffhaltiges Polymer umfasst. In einer wenig bevorzugten Ausführungsform wird das kohlenstoffhaltige Material vor dem Imprägnierschritt von der Faser z.B. durch Abbrennen entfernt. Vorzugsweise wird das kohlenstoffhaltige Material vor dem Imprägnieren jedoch nicht entfernt. Beim Sinterprozess wird der vorher nicht entfernte kohlenstoffhaltige Überzug oxidiert/verbrannt und dadurch entsteht zwischen der Matrix und der Faser eine Lücke und/oder Schicht, welche das Gleiten der Matrix auf den Fasern fördert.

### 4. Aufbringen der Faser auf einen Träger

Im Schritt b) des erfindungsgemäßen Verfahrens wird die imprägnierte Faser auf einen Träger aufgebracht. Hierbei wird ein Gelege erzeugt, das aus der imprägnierten Faser besteht (vgl. Abbildung 2).

Jegliche Art der Aufbringung, die das Erzeugen des genannten Geleges ermöglicht, ist im Prinzip verwendbar. Zur Herstellung dreidimensionaler Bauteile hat es sich jedoch als vorteilhaft erwiesen, die imprägnierte Faser auf den Träger aufzuwickeln. Geeignete Wickelverfahren sind dem Fachmann bekannt.

Typischerweise wird der Träger beim Wickeln so bewegt, dass die Fasern auf dem Träger dicht aneinander zu liegen kommen und so ein zusammenhängendes Gelege bilden. Die Bewegung des Trägers erfolgt vorzugsweise durch einen Wickelroboter. Einige Wickelrobter erlauben das gleichzeitige Aufwickeln von 2, 3 oder mehr Fasern, was eine deutliche Beschleunigung des Wickelverfahrens ermöglicht. Kommerziell erhältlich sind geeignete Wickelroboter zum Beispiel bei KUKA Roboter GmbH.

Das durch das Wickelverfahren erzeugte Gelege kann aus einer oder mehreren Faserschichten bestehen. Besteht das Gelege aus nur einer Schicht, wird dies üblicherweise als "prepreg" bezeichnet.

Erfindungsgemäß werden vorzugsweise mehrere Faserschichten aufgewickelt. Das Wickelverfahren kann so durchgeführt werden, dass ein Gelege mit einer unidirektionalen Schichtung entsteht. Vorzugsweise sind die übereinanderliegenden Faserabschnitte nicht parallel angeordnet. Vielmehr sind die übereinanderliegenden Faserabschnitte im Gelege vorzugsweise in einem Winkel von 0° bis 90° angeordnet. Vorzugsweise wird das Wickelverfahren so durchgeführt, dass die übereinanderliegenden Faserabschnitte im Gelege einen Winkel von 0°, 15°, 20°, 30°, 45°, 50°, 60°, 70°, 80° oder 90° bilden. Bevorzugt ist ein Winkel von 90°.

Die Art und die Form des Trägers bestimmt sich durch das zu erzeugende Bauteil, ist ansonsten aber nicht weiter beschränkt. Vorzugsweise handelt es sich beim Träger um einen Stützkörper, der die Form des zu erzeugendes Bauteils wiedergibt. Typischerweise wird der Stützkörper rotiert, so dass zum Beispiel ein rotationssymmetrisches Bauteil entsteht.

### 5. Gefriergelieren

Zur Erzeugung des Grünkörpers wird der mit der imprägnierten Faser umwickelte Träger gefroren, d.h. auf weniger als 0°C abgekühlt. Dies geschieht typischerweise ohne vorgängige Trocknung des sich auf dem Träger befindlichen Geleges.

Das Bilden eines Gels durch Gefrieren ist im Stand der Technik als "Gefriergelieren" bekannt. Erfindungsgemäß wird beim Gefrieren ein Gel gebildet, welcher die in der zur Imprägnierung verwendeten Suspension enthaltenen Feststoffe umfasst. Vorzugsweise wird beim Gefrieren ein Gel gebildet, welcher die in der zur Imprägnierung verwendeten Suspension enthaltenen die Nanopartikel und Füllstoffpartikel umfasst.

Vor dem Gefrieren sind die Nanopartikel gleichmäßig in der zum Imprägnieren verwendeten Suspension verteilt. Wird ein solcher Sol-Gel-Schlicker gefroren, entstehen Eiskristalle, die bei ihrem Wachstum die Nanopartikel aus dem Wasser verdrängen. Die Nanopartikel verbinden sich dabei untereinander und auch mit dem Füllstoff. Diese Verbindungen lösen sich auch dann nicht mehr auf, wenn die Eiskristalle wieder aufgeschmolzen werden und das Wasser entzogen wird. Durch das Einfrieren des Geleges und das Gelieren des darin vorhandenen Sol-Gel-Schlickers wird also ein formstabiler Grünkörper erzeugt, der in einem weiteren Verfahrensschritt gesintert werden kann.

Im Stand der Technik wird gelehrt, dass das Gefriergelieren schnell zu erfolgen hat, beispielsweise unter Verwendung von flüssigem Stickstoff. Überraschenderweise hat es sich nun gezeigt, dass es von Vorteil ist, diesen Gefrierprozess langsam durchzuführen und dies typischerweise bei Temperaturen, die oberhalb des Siedepunkts von flüssigem Stickstoff liegt. Vorzugsweise wird also kein Schockgefrieren durchgeführt. Resultat dieser langsamen Gefrierung ist das relativ langsame Wachstum von Eiskristallen. Dies hat den Vorteil, dass die Materialporosität gleich und homogen verteilt entsteht und das durch die so entstandenen Poren die Matrix relativ schwach mit den Fasern verbunden ist, so dass die Bruchenergie entlang der Faser läuft.

Beim erfindungsgemäßen Verfahren wird der Gefrierprozess typischerweise so langsam durchgeführt, dass sich längliche Eiskristalle, typischerweise stäbchenförmige oder säulenförmige Eiskristalle, bilden. Dies wird dadurch erreicht, dass kein flüssiges Kühlmittel, insbesondere kein flüssiger Stickstoff verwendet wird. Es hat sich gezeigt, dass es vorteilhaft ist, den mit der imprägnierten Faser umwickelten Träger während einer geeigneten Zeitdauer in einen Kühlraum/Gefrierschrank zu bringen.

Der Gefrierschritt wird so durchgeführt, dass die zu erreichende Gefriertemperatur vorzugsweise frühestens nach 1 Stunde, vorzugsweise frühestens nach 2 oder 3 Stunden, und am bevorzugtesten frühestens nach 4 Stunden erreicht wird. Typischerweise wird das Gelege auf eine Temperatur zwischen -100°C und 0°C, vorzugsweise auf eine Temperatur zwischen -70°C und 0°C oder -70°C und -15°C, und am bevorzugtesten auf eine Temperatur zwischen -50°C und -15°C abgekühlt wird.

### 6. Bereitstellen des Grünkörpers

Zur Bereitstellung des Grünkörpers, der nachfolgend gesintert wird, wird das im vorangehenden Schritt gefrorene Gelege aufgetaut und erwärmt. Ziel ist das Aufschmelzen der Eiskristalle und das Entfernen von Wasser durch Verdampfen, respektive Verdunsten.

Die Durchführung dieses Trocknungsprozesses hängt, wie auch der Gefrierschritt, von der Größe und der Art des zu erzeugenden Bauteils ab.

Typischerweise wird auf eine Temperatur zwischen 30°C und 100°C, vorzugsweise auf eine Temperatur zwischen 30°C und 80°C und am bevorzugtesten zwischen 40°C und 70°C, erwärmt wird. In gewissen Ausführungsformen kann es angezeigt sein, diesen Erwärmungsprozess unter reduziertem Druck oder gar unter Vakuum durchzuführen. Vorzugsweise wird der genannte Erwärmungsprozess aber bei Normaldruck durchgeführt.

Nach Entzug des Wassers entstehen dort, wo sich zuvor die Eiskristalle befunden haben, Poren, respektive Hohlräume. Die zum Imprägnieren der Fasern verwendete Suspension wird so gewählt, dass diese Poren/Hohlräume auch nach Entzug des Wassers zumindest zum Teil erhalten bleiben. Somit ist nach dem Trocknungsschritt ein formstabiler Grünkörper entstanden.

Vorteilhafterweise wird nach dem Trocknungsschritt der Träger, respektive der Stützkörper entfernt, da die Sinterung des Grünkörpers in Anwesenheit des Trägers wenig vorteilhaft sein dürfte. Je nach Form des Trägers kann es notwendig sein, den Grünkörper an bestimmten Stellen aufzuschneiden oder sonst wie aufzutrennen. Gegebenenfalls wird der Grünkörper zugeschnitten, um die gewünschte Form des herzustellenden Bauteils zu erhalten.

Der so erhaltene Grünkörper wird in einem nachfolgenden Schritt gesintert.

### 7. Sintern des Grünkörpers

Als Grünkörper bezeichnet man allgemein einen ungebrannten Rohling, der sich noch leicht bearbeiten lässt. Typischerweise hat der Grünkörper bereits die Form des gewünschten Bauteils.

Um die gewünschte Festigkeit zu erhalten, muss der Grünkörper gesintert werden. Beim Sintern handelt es sich um eine Erhitzung auf Temperaturen, die typischerweise unterhalb der Schmelztemperaturen der zu sinternden Stoffe liegt. Bei dieser Erwärmung werden die partikulären Stoffe vermischt und/oder miteinander verbunden. Im Gegensatz zum Schmelzen werden hierbei jedoch keine oder zumindest nicht alle Ausgangsstoffe aufgeschmolzen.

Das erfindungsgemäße Verfahren erlaubt es, die Temperaturen beim Sintern niedriger als üblich zu halten. Dadurch werden die verwendeten, typischerweise oxidkeramischen Fasern nicht oder nicht zu stark beschädigt. Nach dem Sintern sind die Fasern im Schnittbild immer noch zu erkennen (vgl. Abbildungen 1a, 1b und 1c) d.h. es ist ein langfaserverstärkter, vorzugweise keramischer Verbundwerkstoff entstanden.

Vorzugsweise wird das Sintern bei einer Temperatur von weniger als 1800°C, vorzugsweise bei weniger als 1500°C durchgeführt. Vorzugsweise wird das Sintern in einem Temperaturbereich von 1000°C bis 1300°C, bevorzugter in einem Temperaturbereich von 1100°C bis 1250°C, durchgeführt.

Beim Sintern des Grünkörpers liegt die Heizrate vorzugsweise im Bereich von 0,1°C bis 50°C pro Minute und beträgt am bevorzugtesten ca. 2°C pro Minute.

Typischerweise erfolgt das Erhitzen in mindestens einem Schritt von Raumtemperatur bis zur gewünschten Maximaltemperatur.

Die Verweilzeit ist abhängig von den Dimensionen des Grünkörpers und kann bis zu einer 10 Stunden betragen.

Danach wird abgekühlt, vorzugsweise mit einer Kühlrate im Bereich von 1°C bis 50°C pro Minute. Vorzugsweise beträgt die Kühlrate ca. 5°C pro Minute.

Typischerweise erfolgt das Sintern nicht in Schutzgasatmosphäre (d.h. nicht unter Ausschluss von molekularem Sauerstoff), da der zu sinternde Grünkörper in den meisten Fällen kein oder allenfalls nur sehr wenig kohlenstoffhaltiges Material umfasst.

### 8. Eigenschaften des faserverstärkten Verbundwerkstoffes

Das erfindungsgemäße Verfahren zeichnet sich dadurch aus, dass das nach dem Sintern entstandene Bauteil die gewünschte Porosität aufweist, d.h. dass kein zusätzlicher Schritt zur Verminderung der Porosität notwendig ist. Somit müssen die im Grünkörper und/oder gesintertem Produkt enthaltenen Hohlräume nicht aufgefüllt werden. Im Gegensatz dazu wird im Stand der Technik gelehrt, dass das Auffüllen der Hohlräume mit einem anorganischen Feststoff wie z.B. mit einem Metalloxid, unabdingbar sein kann.

Typischerweise ist die Porosität des gesinterten Bauteils 1 bis 20% geringer als die Porosität von Bauteilen, die mit vergleichbaren Verfahren hergestellt wurden.

Das erfindungsgemäße Verfahren wird vorzugsweise so durchgeführt, dass die Porosität des gesinterten Produktes weniger als 40%, vorzugsweise weniger als 35% und noch bevorzugter von weniger als 35% aufweist. In einer bevorzugten Ausführungsform beträgt die Porosität ca. 30% oder weniger und liegt vorzugsweise im Bereich von 25 bis 35%.

Wenn nicht anders angegeben beziehen sich in der vorliegenden Patentanmeldung alle Angaben betreffend Porosität auf Werte, die mit Quecksilber-Intrusion zu messen sind. Dieses Quecksilber-Intrusions Verfahren ist dem Fachmann bekannt und beruht darauf, dass Quecksilber aufgrund seiner hohen Oberflächenenergie die vorhandenen Poren nicht spontan ausfüllt. Stattdessen muss Quecksilber durch Druck in das poröse Material hinein gepresst werden. Dies geschieht mit dem Quecksilber-Intrusions-Instrument (wie z.B. Pascal 140, Fisons Instruments). Mit zunehmendem Druck dringt Quecksilber zuerst in die größeren, dann auch in die kleineren Poren hinein. Während der Messung wird zunächst ein Druck von 0,0001 bis 4 bar, dann von 1 bis 400 bar angelegt.

Die Porosität des erhaltenen gesinterten Bauteils kann durch die Einstellung des Feststoff- resp. Wassergehalts der zum Imprägnieren verwendeten Suspension beeinflusst/gesteuert werden. Weiterhin beeinflussen die prozentualen Anteile der Feststoffkomponenten der Suspension und die beim Gefrieren, Trocknen und vor allem auch beim Sintern verwendeten Verfahrensparameter die Porosität des erhaltenen Produkts.

Das Verfahren wird typischerweise so durchgeführt, dass der Faservolumenanteil des in Schritt e) erhaltenen Produkts mindestens 20%, 25%, 30%, 35%, 40%, 45% oder 50% beträgt, und vorzugsweise mindestens 25% beträgt.

Der zu erreichende Faservolumenanteil kann durch folgende Verfahrensparameter beeinflusst werden: Feststoffgehalt der zum Imprägnieren verwendeten Suspension; Masse der Suspension, die im aufgewickelten, noch nicht getrockneten Grünkörper vorhanden ist (und dies wird wiederum z.B. durch Wickelgeschwindigkeit, Menge Suspension auf Imprägnierrolle etc. bestimmt). Zur experimentellen Bestimmung des Faservolumenanteils stehen dem Fachmann unter anderem folgende Werte zur Verfügung: Masse der Faser (vor und nach der Imprägnierung bzw. vor und nach dem Aufbringen auf den Träger); Masse pro Fläche des getrockneten Prepregs; weitere, allenfalls theoretische Parameter wie z.B. Dichte des Schlickers und der Fasern. Alternativ kann der Fachmann den Faservolumenanteil über optische Auswertungsprogramme am Bildschirm ermitteln.

### 9. Verwendung des erfindungsgemäß hergestellten Bauteils

Das erfindungsgemäße Verfahren eignet sich insbesondere zur Herstellung von thermisch stabilen, oxidationsbeständigen und/oder langzeitbeständigen Bauteilen.

Die erfindungsgemäß hergestellten Bauteile können beispielsweise in der Luftfahrt oder in der Raumfahrt verwendet werden. Insbesondere können mit dem erfindungsgemäßen Verfahren hergestellt werden: Komponenten für Gasturbinen (in speziellen Flugzeugturbinen, aber auch stationäre Gasturbinen), Radome (für Lenkflugkörper), Brennkammerkomponenten (Antrieb), Schubdüsen (Antriebe), Thermalschutzsysteme und Komponenten für die Energietechnik.

Insbesondere ermöglicht die erfindungsgemäße Kombination von Sol-Gel-Verfahren mit Wickelverfahren die kostengünstige Herstellung von Bauteilen aus faserverstärktem Verbundwerkstoff, insbesondere von Bauteilen aus oxidfaserverstärkter Oxidkeramik. Darüber hinaus ermöglicht diese Route die Verwendung unterschiedlicher Geometrien und Faserarchitekturen. Das Verfahren erlaubt die Herstellung von Bauteilen mit einer oxidkeramischen, typischerweise Mullitbasierten Matrix und damit eine kohlenstofffreien Matrix, was neue Zielanwendungen ermöglicht.

Weitere Vorteile der erfindungsgemäß hergestellten Materialen sind Oxidationsbeständigkeit, Kriechbeständigkeit, thermische Beständigkeit, thermomechanische Beständigkeit/Stabilität, elektromagnetische Vorteile sowie das typischerweise geringe Gewicht.

### 10. Definitionen

Im Kontext der vorliegenden Erfindung ist unter "Faser" vorzugsweise eine kontinuierliche Faser zu verstehen, d.h. ein Gebilde, das in seiner Form einem Faden und/oder einem Draht ähnlich ist.

Im Kontext der vorliegenden Erfindung sind mit "Fasern" diejenigen Fasern gemeint, die beim erfindungsgemäßen Sintern nicht oder zumindest nicht vollständig zerstört (z.B. verbrannt) werden. Ausgeschlossen sind Fasern, die ausschließlich oder zu mehr als 50 Gew.-% aus kohlenstoffhaltigem Material bestehen.

Im Kontext der vorliegenden Erfindung ist eine "keramische Faser" eine Faser, die mindestens zu 90 Gew.-% aus anorganischem Material besteht. Vorzugsweise ist eine "keramische Faser" eine Faser, die mindestens zu 95 Gew.-% aus anorganischem Material besteht. Am bevorzugtesten ist eine "keramische Faser" eine Faser, die mindestens zu 98 Gew.-% aus anorganischem Material besteht.

"Anorganisches Material" enthält definitionsgemäß keine Kohlenstoffatome.

Im Kontext der vorliegenden Erfindung ist eine "oxidkeramische Faser" eine Faser, die mindestens zu 90 Gew.-% aus anorganischen Sauerstoffverbindungen und/oder anorganischen, oxidhaltigen Salzen besteht. Vorzugsweise eine "oxidkeramische Faser" eine Faser, die mindestens zu 95 Gew.-% aus anorganischen Sauerstoffverbindungen und/oder anorganischen, oxidhaltigen Salzen besteht. Am bevorzugtesten ist eine "oxidkeramische Faser" eine Faser, die mindestens zu 98 Gew.-% aus anorganischen Sauerstoffverbindungen und/oder anorganischen, oxidhaltigen Salzen besteht. In einer bevorzugten Ausführungsform sind mit "anorganischen Sauerstoffverbindungen und/oder anorganischen, oxidhaltigen Salzen" Aluminiumoxid, Siliziumoxid, Boroxid, Zirkonoxid und Mischungen davon gemeint.

Im Kontext der vorliegenden Erfindung bedeutet "Imprägnieren" Beschichten, Überziehen oder Benetzen einer Oberfläche (insbesondere einer Faser und/oder deren Einzelfilamente) mit einer wässrigen, typischerweise kolloidalen Suspension, die beim Gefrieren ein Gel bildet, wobei das gebildete Gel nach Entfernen des Wassers zum Sintern geeignet ist. Bevorzugt bedeutet "Imprägnieren" im Kontext der vorliegenden Erfindung Beschichten, Überziehen oder Benetzen einer Oberfläche (insbesondere einer Faser und/oder deren Einzelfilamente) mit einer wässrigen Suspension, deren Feststoffanteil mindestens zu 75 Gew.-%, vorzugsweise mindestens zu 85 Gew.-% und am bevorzugtesten mindestens zu 90 Gew.-% aus anorganischem Material besteht. Bevorzugter bedeutet "Imprägnieren" im Kontext der vorliegenden Erfindung Beschichten, Überziehen oder Benetzen einer Oberfläche (insbesondere einer Faser und/oder deren Einzelfilamente) mit einer wässrigen Suspension, deren Feststoffanteil mindestens zu 75 Gew.-%, vorzugsweise mindestens zu 85 Gew.-% und am bevorzugtesten mindestens zu 90 Gew.-% aus anorganischen Sauerstoffverbindungen und/oder anorganischen, oxidhaltigen Salzen besteht. Am bevorzugtesten bedeutet "Imprägnieren" im Kontext der vorliegenden Erfindung Beschichten, Überziehen oder Benetzen einer Oberfläche (insbesondere einer Faser und/oder deren Einzelfilamente) mit einer wässrigen Suspension, deren Feststoffanteil mindestens zu 75 Gew.-%, vorzugsweise mindestens zu 85 Gew.-% und am bevorzugtesten mindestens zu 90 Gew.-% aus Aluminiumoxid, Siliziumoxid, Boroxid und/oder Zirkonoxid besteht.

Im Kontext der vorliegenden Erfindung ist ein "Gelege" eine textile Flächenstruktur, wie sie typischerweise zur Verstärkung in Faserverbundwerkstoffen eingesetzt wird. Ein Gelege besteht aus mehreren Lagen parallel angeordneter Einzelfilamente oder Fasern (so genannte Faserrovings). Die Lagen sind in einem ersten Fabrikationsschritt nicht untereinander verbunden. Es gibt einlagige, zweilagige und mehrlagige Gelege. Die Lagenausrichtung wird in Grad angegeben.

"Normaldruck" bedeutet im Kontext der vorliegenden Erfindung, dass der herrschende Luftdruck weder erhöht noch erniedrigt wird, d.h. der vor Ort herrschende Luftdruck wird durch den Experimentator nicht verändert. In einigen Fällen ist "Normaldruck" also mit dem mittleren Luftdruck der Atmosphäre auf Meereshöhe (101325 Pa = 1013,25 hPa) gleichzusetzen.

### 11. Bevorzugte Ausführungsformen

Die vorliegende Erfindung ist insbesondere auf die folgenden bevorzugten Ausführungsformen gerichtet:
1. Verfahren zur Herstellung eines Bauteils aus faserverstärktem Verbundwerkstoff, umfassend die Schritte:
   a) Imprägnieren mindestens einer Faser;
   b) Aufbringen der in Schritt a) erhaltenen Faser auf einen Träger;
   c) Gefrieren des in Schritt b) erhaltenen Produkts;
   d) Erwärmen des in Schritt c) erhaltenen Produkts zur Erzeugung eines Grünkörpers;
   e) Sintern des in Schritt d) erhaltenen Produkts, vorzugsweise nach Entfernen des Trägers,
   dadurch gekennzeichnet, dass die nach Schritt d) und/oder e) vorhandenen Hohlräume nicht mit einem anorganischen Feststoff, insbesondere nicht mit einem Metalloxid, aufgefüllt werden, wobei zum Imprägnieren der Faser eine wässrige Suspension verwendet wird, wobei die genannte Suspension Nanopartikel, mindestens einen Füllstoff mit einer Partikelgröße von mindestens 1 µm und optional ein Dispergiermittel umfasst.
2. Verfahren gemäß Ausführungsform 1,
   dadurch gekennzeichnet, dass das in Schritt e) erhaltene Produkt eine Porosität von weniger als 40%, vorzugsweise von weniger als 35%, und noch bevorzugter von ca. 30% oder weniger aufweist und/oder die Porosität vorzugsweise im Bereich von 25 bis 35% liegt.
3. Verfahren gemäß Ausführungsform 1 oder 2,
   dadurch gekennzeichnet, dass es sich bei der Faser um eine kontinuierliche Faser mit einer Länge von vorzugsweise mindestens 2 Metern und/oder um eine keramische Faser handelt.
4. Verfahren gemäß einer der Ausführungsformen 1 bis 3,
   dadurch gekennzeichnet, dass es sich bei der Faser um eine oxidkeramische Faser handelt, die vorzugsweise eine Länge von mindestens 2 Metern aufweist.
5. Verfahren gemäß einer der Ausführungsformen 1 bis 4,
   dadurch gekennzeichnet, dass die Faser mindestens ein Metalloxid, Halbmetalloxid und/oder Nichtmetalloxid umfasst, vorzugsweise ausgewählt aus der Gruppe bestehend aus Aluminiumoxid, Siliziumoxid, Aluminosilikat, Aluminoborsilikat und Boroxid.
6. Verfahren gemäß einer der Ausführungsformen 1 bis 5,
   dadurch gekennzeichnet, dass die Faser mindestens zu 90 Gew.-%, vorzugsweise mindestens zu 95 Gew.-% und am bevorzugtesten mindestens zu 98 Gew.-% aus Metalloxiden und/oder Halbmetalloxiden besteht.
7. Verfahren gemäß einer der Ausführungsformen 1 bis 6,
   dadurch gekennzeichnet, dass die Faser mindestens zu 90 Gew.-%, vorzugsweise mindestens zu 95 Gew.-% und am bevorzugtesten mindestens zu 98 Gew.-% aus Aluminiumoxid, Siliziumoxid, Aluminosilikat, Aluminoborsilikat und/oder Boroxid besteht.
8. Verfahren gemäß einer der Ausführungsformen 1 bis 7,
   dadurch gekennzeichnet, dass die Faser mindestens zu 90 Gew.-%, vorzugsweise mindestens zu 95 Gew.-% und am bevorzugtesten mindestens zu 98 Gew.-% aus Al₂O₃ und/oder SiO₂ besteht.
9. Verfahren gemäß einer der Ausführungsformen 1 bis 8,
   dadurch gekennzeichnet, dass die Faser zwischen 60 und 90 Gew.-% Al₂O₃ und zwischen 10 und 40 Gew.-% SiO₂ umfasst, vorzugsweise zwischen 70 und 90 Gew.- % Al₂O₃ und zwischen 10 und 30 Gew.-% SiO₂ umfasst und am bevorzugtesten zwischen 80 und 90 Gew.-% Al₂O₃ und zwischen 10 und 20 Gew.-% SiO₂ umfasst.
10. Verfahren gemäß einer der Ausführungsformen 1 bis 9,
   dadurch gekennzeichnet, dass die Faser mindestens zu 95 Gew.-%, bevorzugter mindestens zu 98 Gew.-% und am bevorzugtesten mindestens zu 99 Gew.-% aus Mullit besteht.
11. Verfahren gemäß der Ausführungsformen 10,
   dadurch gekennzeichnet, dass Mullit die Formel 3Al₂O₃ · 2SiO₂ oder 2Al₂O₃ · 1SiO₂ hat.
12. Verfahren gemäß einer der Ausführungsformen 1 bis 8,
   dadurch gekennzeichnet, dass die Faser mindestens zu 95 Gew.-%, bevorzugter mindestens zu 98 Gew.-% und am bevorzugtesten mindestens zu 99 Gew.-% aus Al₂O₃ besteht.
13. Verfahren gemäß einer der Ausführungsformen 1 bis 12,
   dadurch gekennzeichnet, dass die Faser mit einem kohlenstoffhaltigen Material, vorzugsweise mit einem kohlenstoffhaltigen Polymer, beschichtet ist.
14. Verfahren gemäß Ausführungsform 13,
   dadurch gekennzeichnet, dass das kohlenstoffhaltige Material vor dem Imprägnieren nicht entfernt wird.
15. Verfahren gemäß einer der Ausführungsformen 1 bis 14,
   dadurch gekennzeichnet, dass in Schritt a) zum Imprägnieren der Faser eine wässrige Suspension, vorzugsweise eine kolloidale Suspension, verwendet wird, die beim Gefrieren in Schritt c) ein Gel bildet.
16. Verfahren gemäß Ausführungsform 15,
   dadurch gekennzeichnet, dass die wässrige Suspension Nanopartikel, vorzugsweise um nanopartikuläres SiO₂, umfasst.
17. Verfahren gemäß einer der Ausführungsformen 15 bis 16,
   dadurch gekennzeichnet, dass die wässrige Suspension SiO₂ Partikel umfasst, welche einen Durchmesser von weniger als 50 nm, vorzugsweise von weniger als 30 nm aufweisen.
18. Verfahren gemäß einer der Ausführungsformen 15 bis 17,
   dadurch gekennzeichnet, dass die wässrige Suspension kolloidales Silica Sol umfasst.
19. Verfahren gemäß einer der Ausführungsformen 15 bis 18,
   dadurch gekennzeichnet, dass die wässrige Suspension mehr als 5 Gew.-%, vorzugsweise mehr als 10 Gew.-% und am bevorzugtesten mehr als 15 Gew.-% Nanopartikel umfasst.
20. Verfahren gemäß einer der Ausführungsformen 15 bis 19,
   dadurch gekennzeichnet, dass die wässrige Suspension zwischen 5 Gew.-% und 50 Gew.-%, vorzugsweise zwischen 5 Gew.-% und 40 Gew.-%, noch bevorzugter zwischen 5 Gew.-% und 30 Gew.-% und am bevorzugtesten zwischen 10 Gew.-% und 30 Gew.-% Nanopartikel umfasst.
21. Verfahren gemäß einer der Ausführungsformen 15 bis 20,
   dadurch gekennzeichnet, dass die wässrige Suspension mindestens einen Füllstoff umfasst.
22. Verfahren gemäß Ausführungsform 21,
   dadurch gekennzeichnet, dass der Füllstoff eine Partikelgröße von mindestens 1 µm und vorzugsweise höchstens 5 µm aufweist.
23. Verfahren gemäß einer der Ausführungsformen 21 bis 22,
   dadurch gekennzeichnet, dass der Füllstoff mindestens ein Metalloxid, Halbmetalloxid und/oder Nichtmetalloxid umfasst, vorzugsweise ausgewählt aus der Gruppe bestehend aus Aluminiumoxid, Siliziumoxid, Aluminosilikat, Aluminoborsilikat und Boroxid.
24. Verfahren gemäß einer der Ausführungsformen 21 bis 23,
   dadurch gekennzeichnet, dass der Füllstoff mindestens zu 90 Gew.-%, vorzugsweise mindestens zu 95 Gew.-% und am bevorzugtesten mindestens zu 98 Gew.-% aus Metalloxiden und/oder Halbmetalloxiden besteht.
25. Verfahren gemäß einer der Ausführungsformen 21 bis 24,
   dadurch gekennzeichnet, dass der Füllstoff mindestens zu 90 Gew.-%, vorzugsweise mindestens zu 95 Gew.-% und am bevorzugtesten mindestens zu 98 Gew.-% aus Aluminiumoxid, Siliziumoxid, Aluminosilikat, Aluminoborsilikat und/oder Boroxid besteht.
26. Verfahren gemäß einer der Ausführungsformen 21 bis 25,
   dadurch gekennzeichnet, dass der Füllstoff mindestens zu 90 Gew.-%, vorzugsweise mindestens zu 95 Gew.-% und am bevorzugtesten mindestens zu 98 Gew.-% aus Al₂O₃ und/oder SiO₂ besteht.
27. Verfahren gemäß einer der Ausführungsformen 21 bis 26,
   dadurch gekennzeichnet, dass der Füllstoff zwischen 60 und 90 Gew.-% Al₂O₃ und zwischen 10 und 40 Gew.-% SiO₂ umfasst, vorzugsweise zwischen 70 und 90 Gew.-% Al₂O₃ und zwischen 10 und 30 Gew.-% SiO₂ umfasst und am bevorzugtesten zwischen 70 und 80 Gew.-% Al₂O₃ und zwischen 20 und 30 Gew.-% SiO₂ umfasst.
28. Verfahren gemäß einer der Ausführungsformen 21 bis 27,
   dadurch gekennzeichnet, dass der Füllstoff mindestens zu 95 Gew.-%, bevorzugter mindestens zu 98 Gew.-% und am bevorzugtesten mindestens zu 99 Gew.-% aus Mullit besteht.
29. Verfahren gemäß der Ausführungsformen 28,
   dadurch gekennzeichnet, dass Mullit die Formel 3Al₂O₃ · 2SiO₂ oder 2Al₂O₃ · 1SiO₂ hat.
30. Verfahren gemäß einer der Ausführungsformen 21 bis 26,
   dadurch gekennzeichnet, dass der Füllstoff mindestens zu 95 Gew.-%, bevorzugter mindestens zu 98 Gew.-% und am bevorzugtesten mindestens zu 99 Gew.-% aus Al₂O₃ besteht.
31. Verfahren gemäß einer der Ausführungsformen 21 bis 30,
   dadurch gekennzeichnet, dass die wässrige Suspension mehr als 30 Gew.-% Füllstoff, vorzugsweise mehr als 40 Gew.-% Füllstoff, umfasst.
32. Verfahren gemäß einer der Ausführungsformen 21 bis 31,
   dadurch gekennzeichnet, dass die wässrige Suspension mehr als 60 Gew.-% Füllstoff, vorzugsweise mehr als 70 Gew.-% Füllstoff, umfasst und vorzugsweise zwischen 50 Gew.-% und 80 Gew.-% Füllstoff umfasst.
33. Verfahren gemäß einer der Ausführungsformen 21 bis 32,
   dadurch gekennzeichnet, dass der Füllstoff bei der Herstellung der Suspension schrittweise zugegeben wird.
34. Verfahren gemäß einer der Ausführungsformen 15 bis 33,
   dadurch gekennzeichnet, dass die wässrige Suspension mindestens ein Dispergiermittel umfasst.
35. Verfahren gemäß einer der Ausführungsformen 15 bis 34,
   dadurch gekennzeichnet, dass die wässrige Suspension als Dispergiermittel eine kohlenstoffhaltige Verbindung wie zum Beispiel eine Carbonsäure umfasst.
36. Verfahren gemäß einer der Ausführungsformen 15 bis 35,
   dadurch gekennzeichnet, dass die wässrige Suspension zwischen 0,1 und 1,5 Gew.-% Dispergiermittel umfasst.
37. Verfahren gemäß einer der Ausführungsformen 15 bis 36,
   dadurch gekennzeichnet, dass die wässrige Suspension eine Viskosität von 100-300 cp, vorzugweise von 150-250 cP aufweist.
38. Verfahren gemäß einer der Ausführungsformen 15 bis 37,
   dadurch gekennzeichnet, dass die Suspension einen Feststoffgehalt von mindestens 65 Gew.-%, vorzugsweise von mindestens 70 Gew.-%, und am bevorzugtesten einen Feststoffgehalt im Bereich von 75-85 Gew.-% aufweist.
39. Verfahren gemäß einer der Ausführungsformen 1 bis 38,
   dadurch gekennzeichnet, dass in Schritt a) zum Imprägnieren der Faser ein Sol-Gel-Schlicker verwendet wird.
40. Verfahren gemäß einer der Ausführungsformen 1 bis 39,
   dadurch gekennzeichnet, dass das Imprägnieren der Faser in Schritt a) in mindestens zwei Schritten und vorzugsweise unter Verwendung mindestens 2 Bäder erfolgt.
41. Verfahren gemäß Ausführungsform 40,
   dadurch gekennzeichnet, dass das Imprägnieren der Faser so erfolgt, dass pro Schritt jeweils nur eine Längsseite der Faser benetzt (respektive imprägniert) wird.
42. Verfahren gemäß einer der Ausführungsformen 1 bis 41
   dadurch gekennzeichnet, dass die Faser beim Imprägnieren der nicht untergetaucht wird.
43. Verfahren gemäß einer der Ausführungsformen 1 bis 42,
   dadurch gekennzeichnet, dass zum Imprägnieren der Faser mindestens eine Imprägnierrolle verwendet wird.
44. Verfahren gemäß einer der Ausführungsformen 1 bis 43,
   dadurch gekennzeichnet, dass die durch den Imprägnierschritt a) verursachte Gewichtszunahme der Faser 1 bis 200%, bevorzugter 100 bis 180% oder 120 bis 160% und am bevorzugtesten 130 bis 150% beträgt.
45. Verfahren gemäß einer der Ausführungsformen 1 bis 44,
   dadurch gekennzeichnet, dass die imprägnierte Faser in Schritt b) auf den Träger aufgewickelt wird, vorzugsweise mit Hilfe eines Wickelroboters.
46. Verfahren gemäß Ausführungsform 45,
   dadurch gekennzeichnet, dass durch das Wickelverfahren eine Gelege aus imprägnierten Fasern erzeugt wird.
47. Verfahren gemäß Ausführungsform 46,
   dadurch gekennzeichnet, dass das Gelege mehrere Schichten Faser umfasst.
48. Verfahren gemäß einer der Ausführungsformen 46 bis 47,
   dadurch gekennzeichnet, dass das Gelege eine unidirektionale Schichtung umfasst.
49. Verfahren gemäß einer der Ausführungsformen 46 bis 48,
   dadurch gekennzeichnet, dass übereinanderliegende Faserabschnitte im Gelege in einem Winkel von 0° bis 90° angeordnet sind.
50. Verfahren gemäß einer der Ausführungsformen 46 bis 49,
   dadurch gekennzeichnet, dass übereinanderliegende Fasern im Gelege in einem Winkel von ungefähr 90° angeordnet sind.
51. Verfahren gemäß einer der Ausführungsformen 1 bis 50,
   dadurch gekennzeichnet, dass der Träger in Schritt b) ein vorzugsweise rotierender Stützkörper ist.
52. Verfahren gemäß einer der Ausführungsformen 1 bis 51,
   dadurch gekennzeichnet, dass in Schritt c) ein Gel gebildet wird.
53. Verfahren gemäß einer der Ausführungsformen 1 bis 52,
   dadurch gekennzeichnet, dass in Schritt c) Eiskristalle gebildet werden, welche vorzugsweise länglich sind.
54. Verfahren gemäß einer der Ausführungsformen 1 bis 53,
   dadurch gekennzeichnet, dass in Schritt c) kein flüssiges Kühlmittel, insbesondere kein flüssiger Stickstoff, verwendet wird.
55. Verfahren gemäß einer der Ausführungsformen 1 bis 54,
   dadurch gekennzeichnet, dass in Schritt c) auf eine Temperatur zwischen -100°C und 0°C, vorzugsweise auf eine Temperatur zwischen -70°C und 0°C oder -70°C und -15°C, und am bevorzugtesten auf eine Temperatur zwischen -50°C und -15°C abgekühlt wird.
56. Verfahren gemäß einer der Ausführungsformen 1 bis 55,
   dadurch gekennzeichnet, dass Schritt c) so durchgeführt wird, dass das in Schritt b) erhaltene Produkt die zu erreichende Gefriertemperatur frühestens nach 1 Stunde, vorzugsweise frühestens nach 2, 3 oder 4 Stunden erreicht.
57. Verfahren gemäß einer der Ausführungsformen 1 bis 56,
   dadurch gekennzeichnet, dass in Schritt d) auf eine Temperatur zwischen 30°C und 100°C, vorzugsweise auf eine Temperatur zwischen 30°C und 80°C und am bevorzugtesten zwischen 40°C und 70°C, erwärmt wird und/oder dass Schritt d) bei Normaldruck durchgeführt wird.
58. Verfahren gemäß Ausführungsform 57,
   dadurch gekennzeichnet, dass die Zieltemperatur mindestens 1 Stunde, vorzugsweise mindestens 2 Stunden, gehalten wird.
59. Verfahren gemäß einer der Ausführungsformen 1 bis 58,
   dadurch gekennzeichnet, dass in Schritt d) Wasser entfernt wird.
60. Verfahren gemäß einer der Ausführungsformen 1 bis 59,
   dadurch gekennzeichnet, dass in Schritt d) bei Normaldruck oder bei einem Druck von weniger als 1 bar durchgeführt wird.
61. Verfahren gemäß einer der Ausführungsformen 1 bis 60,
   dadurch gekennzeichnet, dass die nach dem Schritt d) vorhandenen Hohlräume nicht mit einem anorganischen Feststoff, insbesondere nicht mit einem Metalloxid, aufgefüllt werden.
62. Verfahren gemäß einer der Ausführungsformen 1 bis 61,
   dadurch gekennzeichnet, dass das Sintern in Schritt e) bei einer Temperatur von weniger als 1800°C, vorzugsweise von weniger als 1500°C durchgeführt wird und die Temperatur vorzugsweise im Bereich von 1000°C und 1300°C liegt.
63. Verfahren gemäß einer der Ausführungsformen 1 bis 62,
   dadurch gekennzeichnet, dass das Sintern des Grünkörpers in Schritt e) mit einer Heizrate im Bereich von 0,1 -50°C/Minute, bevorzugt ca. 2°C/Minute, in mindestens einem Schritt von Raumtemperatur bis zu einer Maximaltemperatur von 1500°C erfolgt, vorzugsweise gefolgt von einer Verweilzeit bei der Maximaltemperatur, die in Abhängigkeit von den Dimensionen des Grünkörpers bis zu 10 Stunden betragen kann, gefolgt von einer Abkühlung mit einer Kühlrate im Bereich von vorzugsweise 1 bis 50°C/Minute, besonders bevorzugt ca. 5°C/Minute.
64. Verfahren gemäß einer der Ausführungsformen 1 bis 63,
   dadurch gekennzeichnet, dass das Sintern in Schritt e) ohne Schutzgas in Anwesenheit von Sauerstoff durchgeführt wird.
65. Verfahren gemäß einer der Ausführungsformen 1 bis 64,
   dadurch gekennzeichnet, dass nach dem Sintern vorhandene Hohlräume nicht mit einem anorganischen Feststoff, insbesondere nicht mit einem Metalloxid, aufgefüllt werden.
66. Verfahren gemäß einer der Ausführungsformen 1 bis 65,
   bestehend aus den Schritten a) bis e) und dem Bereitstellen der in Schritt a) verwendeten Suspension.
67. Verwendung einer wässrigen Suspension gemäß einer der Ausführungsformen 15 bis 38 in einem Sol-Gel-Verfahren, vorzugsweise gemäß einer der Ausführungsformen 1 bis 66.

### 12. Ausführungsbeispiel 1

Im Folgenden wird die Herstellung eines Bauteils aus mit oxidkeramischer Faser verstärktem Verbundwerkstoff beschrieben. Die Proben wurden mit Silica Sol und Nextel™ 610 Fasern der Firma 3M™ hergestellt, und zwar über eine Kombination von Wickel-Verfahren und Gefriergelierung. Das Material hat 8 Einzellagen und eine 0°/90° Faserarchitektur.

Zur Herstellung einer Suspension mit 100 Gewichtsteilen wurden ca. 40 Gew.-Teile Silika Sol Nexil 20 von der Firma Nyacol mit ca. 0,5 Gew.-Teilen Dolapix CE64 von der Firma Zschimmer & Schwarz vermischt. Die Suspension wurde anschließend mechanisch mit einem Rührer der Firma IKA gerührt. Anschließend wurden so viele Gew.-Teile Mullite 21113 von der Firma Reimbold & Strick zugefügt, um insgesamt 100 Gew.-Teile zu erhalten. Mullite 21113 wurde in zehn Schritten in einem Abstand von jeweils 3 Minuten unter Rühren zugegeben um zu verhindern, dass sich Agglomerate bilden.

Falls notwendig könnte der hergestellten Suspension zur Regulierung der Viskosität zusätzlich deionisiertes Wasser zugegeben werden. Im Ausführungsbeispiel 1 wurde dies aber nicht gemacht.

Anschließend wurde die erhaltene Suspension in eine Plastikflasche gegeben, welche ca. zu einem Viertel der Höhe mit ZrO₂-Kügelchen mit einem Durchmesser von 1 mm gefüllt ist. Die Plastikflasche wurde anschließend während 9 Stunden maschinell gerollt.

### Imprägnierung:

Als Faser wurde Nextel 610 von der Firma 3M verwendet. Die Faser wurde in zwei Schritten mittels zweier Imprägnierrollen imprägniert, und anschließend auf einen Träger gewickelt.

Zur Bestimmung der Menge des verwendeten Imprägniermaterials wurde 1 m Faser vor und nach dem Imprägnieren gewogen. Vor dem Imprägnieren betrug das Gewicht ca 0,0033165 g/cm Faser vom Typ Nextel 610. Nach dem Imprägnieren betrug das Gewicht ca. 0,008 g/cm Faser. Die prozentuale Gewichtszunahme betrug also ca. 140%.

### Wicklungsverfahren:

Als Träger wurde ein Werkzeug aus Aluminium-Vollmaterial mit den Dimensionen 240 x 240mm verwendet. Das Werkzeug ist in Abbildung 2 zu sehen.

Zum Wickeln wurde ein Wickelroboter der Firma KUKA Roboter GmbH verwendet. Der verwendete Wickelroboter erlaubt es, ein, zwei oder drei Fasern gleichzeitig zu wickeln. Die gleichzeitige Wicklung mehrerer Fasern hat die Beschleunigung des Wickelverfahrens zur Folge. Im Ausführungsbeispiel wurde mit nur einer Faser gewickelt und der Wickelroboter wurde so eingestellt, dass die Fasern auf dem Träger miteinander in Berührung kommen.

### Gefrierprozess:

Nach dem Wickeln wurde der Träger mit dem darauf gebildete Gelege in einen Gefrierschrank gebracht. Die Temperatur des Gefrierschranks wurde auf -18°C eingestellt. Dort wurde der Träger mit dem gewickelten Gelege während einer Zeitdauer von 2-4 Stunden belassen.

Anschließend wurde der Träger mit dem Gelege während 24 Stunden bei einer Temperatur von ca. 60°C bei Normalatmosphäre getrocknet. Dazu wurde der Träger mit dem Gelege in einen Trocknungsofen gebracht. Es wurde ein Umluftofen verwendet.

### Sintern:

Vor dem Sintern wurde der Träger entfernt. Dazu musste der Grünkörper aufgeschnitten werden. Im vorliegenden Beispiel wurden Platten mit einer Dimension von 230x230mm ausgeschnitten (vgl. Abbildung 3). Anschließend wurde bei normaler Atmosphäre bei einer Temperatur von ca. 1200°C gesintert. Die Heizrate betrug 2°C/min, die Abkühlrate betrug 5°/min, die Verweilzeit betrug 3 Stunden.

### Materialeigenschaften des Endprodukts:

Die Porosität des gesinterten Produkts betrug im Anwendungsbeispiel 1 ca. 30%. Experimentell wurde die Porosität über Quecksilber-Intrusion bestimmt.

## Patentansprüche

1. Verfahren zur Herstellung eines Bauteils aus faserverstärktem Verbundwerkstoff, umfassend die Schritte:
a) Imprägnieren mindestens einer Faser;
b) Aufbringen der in Schritt a) erhaltenen Faser auf einen Träger;
c) Gefrieren des in Schritt b) erhaltenen Produkts;
d) Erwärmen des in Schritt c) erhaltenen Produkts zur Erzeugung eines Grünkörpers;
e) Sintern des in Schritt d) erhaltenen Produkts, vorzugsweise nach Entfernen des Trägers,
**dadurch gekennzeichnet, dass** die nach Schritt d) und/oder e) vorhandenen Hohlräume nicht mit einem anorganischen Feststoff, insbesondere nicht mit einem Metalloxid, aufgefüllt werden, wobei zum Imprägnieren der Faser eine wässrige Suspension verwendet wird, wobei die genannte Suspension Nanopartikel, mindestens einen Füllstoff mit einer Partikelgröße von mindestens 1 µm und optional ein Dispergiermittel umfasst.

2. Verfahren gemäß Anspruch 1,
**dadurch gekennzeichnet, dass** die Faser eine kontinuierliche, keramische Faser ist, die mindestens ein Metalloxid und/oder Halbmetalloxid umfasst, vorzugsweise ausgewählt aus der Gruppe bestehend aus Aluminiumoxid, Siliziumoxid, Aluminosilikat, Aluminoborsilikat und Boroxid.

3. Verfahren gemäß Anspruch 1 oder 2,
**dadurch gekennzeichnet, dass** die Faser mit einem kohlenstoffhaltigen Material beschichtet ist und das genannte kohlenstoffhaltige Material vor dem Imprägnieren nicht entfernt wird.

4. Verfahren gemäß einem der Ansprüche 1 bis 3,
**dadurch gekennzeichnet, dass** zum Imprägnieren der Faser eine kolloidale Suspension verwendet wird.

5. Verfahren gemäß Anspruch 1 oder 4,
**dadurch gekennzeichnet, dass** die Suspension SiO₂ Partikel mit einem Durchmesser von weniger als 50 nm, einen Silkat-Füllstoff mit einer Partikelgröße von 1 bis 5 µm und ein Dispergiermittel umfasst, wobei es sich beim Silkat-Füllstoff vorzugsweise um partikuläres Mullit handelt.

6. Verfahren gemäß Anspruch 1, 4 oder 5,
**dadurch gekennzeichnet, dass** die Suspension einen Feststoffgehalt von mindestens 65 Gew.-%, vorzugsweise von mindestens 70 Gew.-%, und am bevorzugtesten einen Feststoffgehalt im Bereich von 75-85 Gew.-% aufweist.

7. Verfahren gemäß einem der Ansprüche 1 bis 6,
**dadurch gekennzeichnet, dass** das Imprägnieren der Faser in mindestens 2 Schritten, vorzugsweise unter Verwendung mindestens einer Imprägnierrolle ohne Untertauchen der Faser, erfolgt.

8. Verfahren gemäß einem der Ansprüche 1 bis 7,
**dadurch gekennzeichnet, dass** die imprägnierte Faser in Schritt b) zur Erzeugung eines Geleges auf einen vorzugsweise rotierenden Stützkörper aufgewickelt wird; und
**dadurch gekennzeichnet, dass** im Gelege übereinanderliegende Faserabschnitte vorzugsweise im Winkel von 0° bis 90° zueinander angeordnet sind.

9. Verfahren gemäß einem der Ansprüche 1 bis 8,
**dadurch gekennzeichnet, dass** in Schritt c) auf eine Temperatur zwischen -100°C und 0°C, vorzugsweise auf eine Temperatur zwischen -70°C und 0°C oder -70°C und -15°C, und am bevorzugtesten auf eine Temperatur zwischen -50°C und -15°C abgekühlt wird.

10. Verfahren gemäß einem der Ansprüche 1 bis 9,
**dadurch gekennzeichnet, dass** Schritt c) so durchgeführt wird, dass das in Schritt b) erhaltene Produkt die zu erreichende Gefriertemperatur frühestens nach 1 oder 2 Stunden, vorzugsweise frühestens nach 3 Stunden erreicht.

11. Verfahren gemäß einem der Ansprüche 1 bis 10,
**dadurch gekennzeichnet, dass** das in Schritt e) erhaltene Produkt eine Porosität von weniger als 40%, vorzugsweise von weniger als 35%, und noch bevorzugter von ca. 30% oder weniger aufweist und/oder die Porosität vorzugsweise im Bereich von 25 bis 35% liegt; und/oder **dadurch gekennzeichnet, dass** der Faservolumenanteil des in Schritt e) erhaltenen Produkts mindestens 20%, 25%, 30%, 35%, 40%, 45% oder 50% beträgt, und vorzugsweise mindestens 25% beträgt.

12. Verfahren gemäß einem der Ansprüche 1 bis 11,
**dadurch gekennzeichnet, dass** in Schritt d) auf eine Temperatur zwischen 30°C und 100°C, vorzugsweise auf eine Temperatur zwischen 30°C und 80°C und am bevorzugtesten zwischen 40°C und 70°C, erwärmt wird und/oder dass Schritt d) bei Normaldruck durchgeführt wird.

13. Verwendung einer wässrigen Suspension gemäß einem der Ansprüche 1 oder 4 bis 6 in einem Verfahren gemäß einem der Ansprüche 1 bis 12.

## Claims

1. Method for manufacturing a component from fibre-reinforced composite material, comprising the steps of:
a) impregnating at least one fibre;
b) applying the fibre obtained in step a) to a carrier;
c) freezing the product obtained in step b);
d) heating the product obtained in step c) to produce a green body;
e) sintering the product obtained in step d), preferably after removing the carrier,
**characterised in that** the cavities present after step d) and/or e) are not filled with an inorganic solid, in particular not with a metal oxide, an aqueous suspension being used for impregnating the fibre, said suspension comprising nanoparticles, at least one filler having a particle size of at least 1 µm, and optionally a dispersing agent.

2. Method according to claim 1,
**characterised in that** the fibre is a continuous, ceramic fibre which comprises at least one metal oxide and/or semimetal oxide, preferably selected from the group consisting of aluminium oxide, silicon oxide, aluminosilicate, aluminium borosilicate and boron oxide.

3. Method according to either claim 1 or claim 2, **characterised in that** the fibre is coated with a carbon-containing material and said carbon-containing material is not removed prior to the impregnation.

4. Method according to any of claims 1 to 3,
**characterised in that** a colloidal suspension is used for impregnating the fibre.

5. Method according to either claim 1 or claim 4,
**characterised in that** the suspension comprises SiO₂ particles having a diameter of less than 50 nm, a silicate filler having a particle size of 1 to 5 µm, and a dispersing agent, the silicate filler preferably being particulate mullite.

6. Method according to claim 1, 4 or 5,
**characterised in that** the suspension has a solids content of at least 65 % by weight, preferably of at least 70 % by weight, and most preferably a solids content in the range of 75-85 % by weight.

7. Method according to any of claims 1 to 6,
**characterised in that** the fibre is impregnated in at least 2 steps, preferably using at least one impregnating roll, without submersion of the fibre.

8. Method according to any of claims 1 to 7,
**characterised in that** in step b) the impregnated fibre is wound up to produce a roving on a preferably rotating support body; and
**characterised in that** fibre portions overlapping in the roving are generally arranged at an angle of 0° to 90° to one another.

9. Method according to any of claims 1 to 8,
**characterised in that** in step c) cooling is carried out to a temperature between -100 °C and 0 °C, preferably to a temperature between -70 °C and 0 °C or -70 °C and -15 °C, and most preferably to a temperature between -50 °C and -15 °C.

10. Method according to any of claims 1 to 9,
**characterised in that** step c) is carried out in such a way that the product obtained in step b) achieves the freezing temperature to be achieved after 1 or 2 hours at the earliest, preferably after 3 hours at the earliest.

11. Method according to any of claims 1 to 10,
**characterised in that** the product obtained in step e) has a porosity of less than 40 %, preferably of less than 35 %, and more preferably of approximately 30 % or less, and/or the porosity is preferably in the range of 25 % to 35 %; and/or
**characterised in that** the fibre volume content of the product obtained in step e) is at least 20 %, 25 %, 30 %, 35 %, 40 %, 45 % or 50 %, and preferably is at least 25 %.

12. Method according to any of claims 1 to 11,
**characterised in that** in step d) heating is carried out to a temperature between 30 °C and 100 °C, preferably to a temperature between 30 °C and 80 °C, and most preferably between 40 °C and 70 °C, and/or **in that** step d) is carried out at standard pressure.

13. Use of an aqueous suspension according to any of claims 1 or 4 to 6 in a method according to any of claims 1 to 12.

## Revendications

1. Procédé de fabrication d'un élément en matière composite renforcée de fibres, comprenant les étapes :
a) d'imprégnation d'au moins une fibre ;
b) de dépôt de la fibre obtenue dans l'étape a) sur un support ;
c) de congélation du produit obtenu dans l'étape b) ;
d) de réchauffement du produit obtenu dans l'étape c) pour la formation d'une ébauche de corps de base ;
e) de frittage du produit obtenu dans l'étape d), de préférence, après le retrait du support,
**caractérisé en ce qu'**après l'étape d) et/ou e), des cavités présentes ne sont pas remplies avec un solide inorganique, notamment avec un oxyde métallique, dans lequel pour l'imprégnation de la fibre, une suspension aqueuse est utilisée, dans lequel ladite suspension comprend des nanoparticules, au moins une charge avec une taille particulaire d'au moins 1 nm et éventuellement un produit dispersant.

2. Procédé selon la revendication 1,
**caractérisé en ce que** la fibre est une fibre continue, de céramique, qui comprend au moins un oxyde métallique et/ou un oxyde de métalloïde, de préférence choisi dans le groupe constitué de l'oxyde d'aluminium, de l'oxyde de silicium, de silicate d'aluminium, de silicate d'aluminium et de bore et de l'oxyde de bore.

3. Procédé selon la revendication 1 ou 2,
**caractérisé en ce que** la fibre est revêtue avec une matière contenant du carbone et ladite matière contenant du carbone n'est pas retirée avant l'imprégnation.

4. Procédé selon l'une des revendications 1 à 3,
**caractérisé en ce que**, pour l'imprégnation de la fibre, une suspension colloïdale est utilisée.

5. Procédé selon la revendication 1 ou 4,
**caractérisé en ce que** la suspension comprend des particules de SiO₂ avec un diamètre inférieur à 50 nm, une charge à base de silicate avec une taille particulaire de 1 à 5 µm et un produit dispersant, dans lequel, dans le cas de la charge à base de silicate, il s'agit de préférence de mullite particulaire.

6. Procédé selon la revendication 1, 4 ou 5,
**caractérisé en ce que** la suspension présente une teneur en solides d'au moins 65 % en poids, de préférence, d'au moins 70 % en poids, et de manière particulièrement préférée, une teneur en solides dans la plage de 75 à 85 % en poids.

7. Procédé selon l'une des revendications 1 à 6,
**caractérisé en ce que** l'imprégnation de la fibre est effectuée en au moins 2 étapes, de préférence, moyennant l'utilisation d'au moins un rouleau d'imprégnation sans immersion de la fibre.

8. Procédé selon l'une des revendications 1 à 7, **caractérisé en ce que** la fibre imprégné dans l'étape b) est enroulée sur un corps de support de préférence en rotation pour la formation d'une natte ; et
**caractérisé en ce que** des parties de fibre superposées dans la natte sont disposées les unes par rapport aux autres de préférence avec un angle de 0 ° à 90 °.

9. Procédé selon l'une des revendications 1 à 8,
**caractérisé en ce que**, dans l'étape c),on refroidit à une température entre -100 °C et 0 °C, de préférence à une température entre -70 °C et 0 °C ou entre -70 °C et -15 °C, et plus préférentiellement à une température entre -50 °C et -15 °C.

10. Procédé selon l'une des revendications 1 à 9,
**caractérisé en ce que** l'étape c) est effectuée de telle manière que le produit obtenu dans l'étape b) atteint la température pour arriver à la congélation au plus tôt après 1 ou 2 heures, de préférence, au plus tôt après 3 heures.

11. Procédé selon l'une des revendications 1 à 10,
**caractérisé en ce que** le produit obtenu dans l'étape e) présente une porosité inférieure à 40 %, de préférence, inférieure à 35 %, et de manière encore préférée d'environ 30 % ou moins, et/ou la porosité se situe de préférence dans la plage de 25 à 35 % ; et/ou **caractérisé en ce que** la portion volumique de la fibre du produit obtenu dans l'étape e) se situe à au moins 20 %, 25 %, 30 %, 35 %, 40 %, 45 % ou 50 %, et se situe de préférence à au moins 25 %.

12. Procédé selon l'une des revendications 1 à 11,
**caractérisé en ce que**, dans l'étape d), on réchauffe à une température entre 30 °C et 100 °C, de préférence, à une température entre 30 °C et 80 °C, et plus préférentiellement entre 40 °C et 70 °C, et/ou que l'étape d) est réalisée à la pression normale.

13. Utilisation d'une suspension aqueuse selon l'une des revendications 1 ou de 4 à 6 dans un procédé selon l'une des revendications 1 à 12.
